# EUROPÄISCHE PATENTSCHRIFT

(11) **EP 2 409 865 B1**
(45) Veröffentlichungstag und Bekanntmachung des Hinweises auf die Patenterteilung: **15.08.2018**
(21) Anmeldenummer: 11184659.8
(22) Anmeldetag: 28.09.2007
(51) Int. Cl.: B60J 1/20

(54) **Antriebsvorrichtung zum Bewegen eines Abdeckelementes, Türbaugruppe und Verfahren zur Montage der Antriebsvorrichtung**
Drive device for moving a covering element, door component and method for assembling the drive device
Dispositif d'entraînement destiné au déplacement d'un élément de recouvrement, composant de porte et procédé de montage du dispositif d'entraînement

(30) Priorität: 29.09.2006 DE 102006047348
(43) Veröffentlichungstag der Anmeldung: 25.01.2012
(62) Teilanmeldung aus: 07820724.8
(73) Patentinhaber: Macauto Industrial Co., Ltd., Tainan City 710 (TW)
(72) Erfinder: Kriese, Olaf, 96450 Coburg (DE); Stammberger, Werner, 96271 Grub am Forst (DE); Bätz, Christian, 96484 Meeder (DE); Herwig, Arnd, Oakland TWP, MI 48306 (US); Höhn, Sebastian, 96465 Neustadt (DE)
(74) Vertreter: Ostriga Sonnet Wirths & Vorwerk

(56) Entgegenhaltungen:
- EP-A- 1 123 824
- DE-A1- 3 415 930
- DE-U1- 20 112 948
- DE-U1-202004 014 652
- US-A- 4 850 084

## Beschreibung

Die Erfindung betrifft ein Verfahren zur Montage einer Antriebsvorrichtung.

Eine derartige Antriebsvorrichtung findet Verwendung insbesondere zum Bewegen eines Abdeckelementes in Form eines Sonnenrollos zum Abdecken einer Fensteröffnung einer Kraftfahrzeugtür und weist zu diesem Zweck einen Antrieb, ein Führungsmittel und ein mit dem Antrieb gekoppeltes Schubelement, das in den Führungsmittel geführt ist und zum Bewegen des Abdeckelementes mit dem Abdeckelement verbindbar ist, auf.

Aus der EP 1 123 824 A2 ist ein Seitenfensterrollo für Kraftfahrzeuge bekannt, das von einer derartigen Antriebsvorrichtung Gebrauch macht. Die Antriebsvorrichtung gemäß der EP 1 123 824 A2 weist ein Führungsmittel in Form von zwei vertikal an einer Fahrzeugtür angeordneten Führungsschienen auf, entlang derer ein Schlitten geführt wird, der mit einer oberen, horizontalen Leiste, dem so genannten Spriegel, der Rollobahn des Sonnenrollos verbunden ist. Der Schlitten ist mit einem Schubelement gekoppelt, das an seinem äußeren Umfang eine Schneckenverzahnung aufweist, in die ein Ritzel eines Antriebs eingreift und das Schubelement zum Betätigen des Sonnenrollos bewegt. Die Rollobahn des Sonnenrollos ist auf eine Wickelwelle in einer Türbrüstung der Fahrzeugtür gewickelt und kann durch einen horizontalen Schlitz in der Türbrüstung aus der Türbrüstung geführt und mittels des Schubelements und des Schlittens zum Abdecken der Fensteröffnung in den Bereich der Fensteröffnung gezogen werden. Bei diesem Vorgang wird die Rollobahn von der Wickelwelle abgewickelt und verdeckt im aufgezogenen Zustand die Fensteröffnung derart, dass der Lichteinfall durch die Fensteröffnung unterbunden oder zumindest gedämpft ist und Fahrzeuginsassen somit vor Sonneneinstrahlung geschützt sind.

Die Antriebsvorrichtung gemäß der EP 1 123 824 A2 verwendet Führungsschienen, die sich in dem Bereich der Fensteröffnung erstrecken. Für einen zuverlässigen Betrieb des Sonnenrollos sind zwei seitliche Führungsschienen erforderlich, entlang derer die Rollobahn des Sonnenrollos aufgezogen und in ihre die Fensteröffnung abdeckende Position gebracht wird. Die seitlichen Führungsschienen sind hierbei zwingend erforderlich, um die obere Rollokante und die Schlitten zu führen und zu stabilisieren. Für die Führungsschienen steht jedoch nur ein geringer Bauraum zur Verfügung, so dass der Einbau des Sonnenrollos zwangsläufig mit einer Verbreiterung der Rahmenverkleidung bzw. eines Zwischenstegs bei einer geteilten Fensterscheibe verbunden ist, was zu einer Verringerung der Fensterscheibenfläche und damit des Blickbereichs eines Insassen führt und mit einem erheblichen Montageaufwand für die Anbringung der Führungsschienen und notwendiger Verkleidungselemente verbunden ist. Gleichzeitig kann die äußere Erscheinung des Fensterrahmens ästhetisch durch die in den Fensterbereich hineinragenden Führungsschienen beeinträchtigt sein.

Aufgabe der vorliegenden Erfindung ist es, ein Verfahren zur Montage einer Antriebsvorrichtung zur Verfügung zu stellen, das eine kompakte Bauweise der Antriebsvorrichtung bei geringst möglicher Beeinträchtigung der abzudeckenden Öffnungsfläche und kostengünstiger Herstellung ermöglicht und einen sicheren und zuverlässigen Betrieb der Antriebsvorrichtung gewährleistet.

Bei einer Antriebsvorrichtung der gattungsgemäßen Art ist vorgesehen, dass der Antrieb zum Antreiben des Schubelements über ein Übertragungsmittel mit dem Schubelement gekoppelt ist, wobei das Übertragungsmittel sich zumindest abschnittsweise in dem Führungsmittel erstreckt.

Dies geht von dem Grundgedanken aus, eine Antriebsvorrichtung zum Bewegen eines Abdeckelements, beispielsweise eines Sonnenrollos, nach Art eines einsträngigen Fensterhebermechanismus auszubilden, der ein Übertragungsmittel verwendet, das mit einem Schubelement gekoppelt ist und zum Antreiben des Schubelements bewegt wird. Um eine möglichst kompakte Bauweise zu erreichen, ist das Übertragungsmittel hierbei in das Führungsmittel, in dem das Schubelement geführt wird, integriert und erfordert somit keinen zusätzlichen Bauraum.

In am Fahrzeug montiertem Zustand ist die Antriebsvorrichtung mit dem Abdeckelement verbunden, wobei die Verbindung über das Schubelement hergestellt wird und das Abdeckelement in eine Schließrichtung zum Schließen der Öffnung oder in eine der Schließrichtung entgegen gesetzten Öffnungsrichtung zum Freigeben der Öffnung des Kraftfahrzeugs bewegbar ist. Das Abdeckelement kann beispielsweise ein Sonnenrollo sein, das durch Bewegen des Schubelements vor eine Fensteröffnung einer Fahrzeugtür geschoben wird, um die Fensteröffnung abzudecken, oder aus dem Bereich der Fensteröffnung entfernt wird, um die Fensteröffnung freizugeben.

Das Schubelement ist vorteilhafterweise in Form eines drucksteifen stangenförmigen Elements ausgebildet und erstreckt sich im Wesentlichen parallel zur Öffnungsrichtung und Schließrichtung des Abdeckelements. Das Übertragungsmittel ist nach Art eines einsträngigen Seilfensterhebers als flexibles Seil ausgebildet, ist mit dem Schubelement verbunden und stellt die Verbindung zwischen dem Schubelement und dem Antrieb her. Durch Betätigen des Antriebs wird das Seil, das zumindest abschnittsweise in dem Führungsmittel der Antriebsvorrichtung geführt ist, bewegt und somit eine Kraft auf das Schubelement ausgeübt, die zu einer Verstellung des Abdeckelements führt.

Bevorzugt ist das Führungsmittel, in dem das Schubelement geführt ist, derart am Fahrzeug oder einem Teil des Fahrzeugs angeordnet, dass sich das Führungsmittel im Wesentlichen außerhalb der abzudeckenden Öffnung des Fahrzeugs erstreckt und das Führungsmittel das mit dem Abdeckelement gekoppelte Schubelement zum Abdecken der Öffnung in den Bereich der Öffnung führt. Das zur Führung des Schubelements dienende Führungsmittel ist somit außerhalb des Bereichs der abzudeckenden Öffnung angeordnet und führt das Schubelement derart, dass das mit dem Schubelement gekoppelte Abdeckelement zur Abdeckung der Öffnung in den Bereich der Öffnung bewegt wird. Insbesondere kann das stangenförmig ausgeführte Schubelement in diesem Zusammenhang zum Schließen der Öffnung aus dem Führungsmittel heraus geschoben werden, wobei das mit dem Schubelement gekoppelte Abdeckelement über die Öffnung gezogen wird und die Öffnung somit verdeckt. Die Antriebsvorrichtung kann in dieser Weise zum Bewegen eines Sonnenrollos verwendet und an einer Fahrzeugtür derart angeordnet werden, dass das Führungsmittel sich im Wesentlichen in einem Türinnenraum der Fahrzeugtür erstreckt und im Betrieb das Schubelement zusammen mit dem Sonnenrollo in den Bereich der Fensteröffnung der Fahrzeugtür verschiebt.

Bevorzugt ist das Führungsmittel als Führungskanal oder Führungsrohr ausgebildet, der bzw. das sich in eine Erstreckungsrichtung im Wesentlichen parallel zur Öffnungsrichtung und Schließrichtung des Abdeckelements erstreckt und in dem das als Stange ausgebildete Schubelement geführt wird. Das sich entlang der Öffnungsrichtung und Schließrichtung erstreckende Führungsmittel gibt somit die Bewegungsrichtung des Abdeckelements vor, indem es das Schubelement in Öffnungsrichtung oder Schließrichtung führt und auf diese Weise die Bewegung des Abdeckelements leitet und festlegt.

Vorteilhafterweise ist das Führungsmittel derart ausgebildet, dass es das Schubelement quer zu seiner Erstreckungsrichtung abstützt. Hierbei ist denkbar und vorteilhaft, dass das in Form eines Führungsrohrs ausgebildete Führungsmittel das Schubelement quer zur Erstreckungsrichtung des Führungsmittels vollständig und allseitig führt und eine geschlossene, rohrförmige Führungsbahn ausbildet. Denkbar ist jedoch auch, dass das Führungsmittel in Form eines Führungskanals das Schubelement parallel zu einer ersten, zur Erstreckungsrichtung senkrechten Richtung beidseitig abstützt, so dass in diese erste Richtung das Schubelement relativ zum Führungsmittel festgelegt ist, parallel zu einer zweiten, zur Erstreckungsrichtung senkrechten Richtung jedoch lediglich einseitig abstützt, so dass eine Führung des Schubelements in dem Führungsmittel in der zweiten Richtung nur einseitig erfolgt. Ein solches Führungsmittel kann beispielsweise durch einen im Querschnitt U-förmigen Führungskanal ausgebildet sein, der mittels seiner beiden Schenkel in die erste Richtung eine beidseitige Führung und mittels seiner Grundfläche in die zweite Richtung lediglich eine einseitige Führung bewirkt.

Um zu gewährleisten, dass das Schubelement in dem als Führungskanal ausgebildeten Führungsmittel sicher geführt wird, kann das Schubelement durch eine auf das Schubelement ausgeübte, parallel zur zweiten Richtung wirkende Vorspannung in dem Führungsmittel gehalten werden. In diesem Fall erfolgt die Führung des Schubelements in dem Führungsmittel somit zu drei Seiten durch die bauliche Gestaltung des Führungsmittels, zur vierten Seite jedoch über eine vorspannende, das Schubelement in dem Führungsmittel haltende Kraft.

In einer vorteilhaften Ausgestaltung ist das Führungsmittel in eine Türmodulträgerplatte oder eine Türinnenverkleidung einer Fahrzeugtür integriert. Das Führungsmittel kann in diesem Zusammenhang beispielsweise als Führungskanal in die Türmodulträgerplatte oder die Türinnenverkleidung eingeformt sein und somit eine Führung für das Schubelement entlang der Türmodulträgerplatte oder der Türinnenverkleidung bilden. Alternativ ist selbstverständlich möglich und vorteilhaft, im Rahmen einer modularen Ausbildung der Antriebsvorrichtung das Führungsmittel als gesonderte, am Fahrzeug anzuordnende Baueinheit auszubilden, die beispielsweise an einem Türinnenblech, einer Türmodulträgerplatte oder einer Türinnenverkleidung der Fahrzeugtür befestigt wird.

Das Schubelement ist mit dem Übertragungsmittel gekoppelt und wird über das Übertragungsmittel mittels des Antriebs der Antriebsvorrichtung angetrieben. Vorteilhafterweise ist das Schubelement über einen Mitnehmer mit dem Übertragungsmittel verbunden, wobei in einer bevorzugten Ausgestaltung das Schubelement über den Mitnehmer in einem ersten Abschnitt des Führungsmittels geführt und mit dem Mitnehmer gekoppelt ist und mittels des Übertragungsmittels gleitend in dem Führungsmittel bewegt wird. Der Mitnehmer ist hierbei in seiner Formgebung dem Führungsmittel angepasst, um eine sichere, reibungsarme, gleitende Führung des Mitnehmers in dem Führungsmittel zu gewährleisten.

Um die gleitende Bewegung des Mitnehmers in dem Führungsmittel weitgehend zu optimieren, kann der Mitnehmer mindestens ein elastisches Element aufweisen, das derart ausgebildet ist, dass der Mitnehmer quer zur Erstreckungsrichtung des Führungsmittels in dem Führungsmittel gedämpft geführt wird. Das elastische Element ist beispielsweise in Form von an dem Mitnehmer angeordneten Federn ausgeführt, die zwischen dem Mitnehmer und den seitlichen Führungsflächen des Führungsmittels wirken, um auf diese Weise eine geschmeidige, spielfreie und klapperfreie Führung des Mitnehmers in dem Führungsmittel zu bewirken. Ist der Mitnehmer aus Kunststoff hergestellt, so können die elastischen Elemente, beispielsweise in Form von Federn, mittels der ZweiKomponenten-Technik an den Mitnehmer einstückig angespritzt sein. Der Mitnehmer und/oder die elastischen Elemente können weiterhin in ihrem Material auf das Führungsmittel abgestimmt sein, um eine möglichst reibungsarme Bewegung des Mitnehmers in dem Führungsmittel zu erreichen.

Bevorzugt ist der erste Abschnitt des Führungsmittels an seinem einen Ende mit dem Antrieb und an seinem anderen mit einer Umlenkung zur Umlenkung des als Seil ausgebildeten Übertragungsmittels verbunden. Das nach Art eines einsträngigen Seilfensterhebers ausgebildete Übertragungsmittel erstreckt sich somit von dem Antrieb hin zur Umlenkung, wird durch die Umlenkung umgelenkt und erstreckt sich zurück zum Antrieb. Der mit dem Übertragungsmittel gekoppelte Mitnehmer wird dann im Betrieb entlang dem ersten Abschnitt des Führungsmittels bewegt, indem der Antrieb das Übertragungsmittel bewegt und auf diese Weise den Mitnehmer zwischen dem mit dem Antrieb verbundenen Ende und dem mit der Umlenkung verbundenen Ende des ersten Abschnitts des Führungsmittels verschiebt.

In einer vorteilhaften Ausgestaltung ist die Umlenkung zum Längenausgleich des Übertragungsmittels in Erstreckungsrichtung des Führungsmittels federelastisch mit dem ersten Abschnitt des Führungsmittels verbunden. Die Kopplung zwischen der Umlenkung und dem Führungsmittel ist somit nicht starr ausgebildet, sondern federelastisch vorgespannt, so dass ein Spiel im Übertragungsmittel automatisch ausgeglichen wird. Die federelastische Vorspannung bewirkt, dass, wenn das Übertragungsmittel nicht straff zwischen dem Antrieb und der Umlenkung gespannt ist, die Umlenkung vom Führungsmittel weggedrückt wird, um somit den Abstand zwischen der Umlenkung und dem Antrieb zu vergrößern und das Übertragungsmittel zwischen dem Antrieb und der Umlenkung straff zu spannen.

An dem Ende, das dem mit der Umlenkung verbundenen Ende gegenüberliegt, ist der erste Abschnitt des Führungsmittels mit dem Antrieb der Antriebsvorrichtung verbunden. Ausgehend von dem Antrieb erstreckt sich das Übertragungsmittel bevorzugt durch einen Freischnitt im Führungsmittel in das Führungsmittel, um im Inneren des Führungsmittels vom Antrieb zur Umlenkung und wieder zurück geführt zu werden. Durch die Führung des Übertragungsmittels in dem Führungsmittel wird ein besonders Platz sparender Aufbau erreicht, wobei gleichzeitig das beispielsweise als Seil ausgebildete Übertragungsmittel gegen Einwirkungen von Außen geschützt und gegen Schmutz und Feuchtigkeit abgeschirmt ist. Dadurch, dass das Übertragungsmittel ausgehend vom Antrieb durch einen in unmittelbarer Nähe des Antriebs angeordneten Freischnitt in das Führungsmittel eingeleitet wird, wird erreicht, dass das Übertragungsmittel nahezu auf seiner ganzen Länge innerhalb des Führungsmittels verläuft und somit vom Führungsmittel weitestgehend eingehüllt und abgeschirmt ist.

Bevorzugt ist das Übertragungsmittel über einen Seilnippel oder eine materialschlüssige Verbindung, insbesondere eine Klebe- oder Schmelzverbindung, fest mit dem Mitnehmer verbunden. Das Übertragungsmittel ist somit starr an den Mitnehmer gekoppelt, so dass eine durch den Antrieb bewirkte Bewegung des Übertragungsmittels direkt in eine Bewegung des Mitnehmers im Führungsmittel übertragen wird.

In einer Ausgangsstellung steht der Mitnehmer vorteilhafterweise mit einem Anschlag am der Umlenkung zugewandten Ende des Führungsmittels in Kontakt, wobei der Anschlag die Ausgangsstellung des Mitnehmers definiert. Beispielsweise liegt der Mitnehmer in der Ausgangsstellung an einem Anschlag im Bereich der Umlenkung an und steht in einer Position, in der das Schubelement weistestmöglich in das Führungsmittel eingefahren ist und das mit dem Schubelement gekoppelte Abdeckelement in einer maximal geöffneten Stellung steht. Denkbar ist in diesem Zusammenhang auch, dass der Mitnehmer in einer Endstellung, in der das Abdeckelement in einer die Öffnung des Fahrzeugs maximal abdeckenden Stellung angeordnet ist, an einem Anschlag anliegt, der beispielsweise im Bereich des Antriebs angeordnet ist. Denkbar ist weiterhin, eine kinematisch umgekehrte Anordnung vorzusehen, bei der der Mitnehmer bei geschlossenem Abdeckelement an einem Anschlag im Bereich der Umlenkung und bei geöffnetem Abdeckelement an einem Anschlag im Bereich des Antriebs anliegt.

Zusätzlich zum Anschlag kann im Bereich der Umlenkung und/oder im Bereich des Antriebs ein Arretierungsmittel vorgesehen sein, mittels dessen der Mitnehmer in der Ausgangsstellung und/oder in der Endstellung quer zur Erstreckungsrichtung des Führungsmittels festgesetzt ist. Das Arretierungsmittel bewirkt, dass der Mitnehmer in der Ausgangsstellung und/oder der Endstellung klapperfrei in dem Führungsmittel gehalten wird, um in den jeweiligen Endlagen, entsprechend der geöffneten bzw. der geschlossenen Stellung des Abdeckelementes, eine definiert festgesetzte Lage des Mitnehmers im Führungsmittel zu erreichen.

Denkbar und vorteilhaft ist in diesem Zusammenhang auch, an den Mitnehmer ein weiteres elastisches, beispielsweise angespritztes Element vorzusehen, mittels dessen der Mitnehmer relativ zum Anschlag und/oder zum Arretierungsmittel gedämpft ist, um ein Klappern in der Ausgangsstellung oder der Endstellung des Mitnehmers zu verhindern. Durch das in Erstreckungsrichtung des Führungsmittels zwischen dem Mitnehmer und dem Führungsmittel wirkende federelastische Element wird der Mitnehmer in der Ausgangsstellung oder der Endstellung gegenüber dem Führungsmittel vorgespannt und kann auf diese Weise klapperfrei auch bei Erschütterungen gehalten werden.

In einer besonders vorteilhaften Ausführungsform ist das Schubelement lösbar mit dem Übertragungsmittel verbunden. Dieses ist insbesondere von Vorteil, um eine leichte Montage des Schubelements in dem Führungsmittel und eine Demontage aus dem Führungsmittel zu ermöglichen.

Gleichzeitig kann die lösbare Verbindung zwischen dem Schubelement und dem Übertragungsmittel derart ausgestaltet sein, dass bei einem Einklemmfall die Verbindung zwischen dem Schubelement und dem Übertragungsmittel auf automatische Weise aufgehoben wird und somit das Einklemmen eines Objekts durch das Abdeckelement verhindert wird. Dieses erfolgt insbesondere dadurch, dass das Schubelement über eine druckkraftabhängige Verbindungsvorrichtung mit dem in dem Führungsmittel geführten und mit dem Übertragungsmittel gekoppelten Mitnehmer verbunden ist.

Die Verbindungsvorrichtung ist bevorzugt derart ausgebildet, dass bei einer aufgrund eines Einklemmfalls wirkenden Druckkraft in Öffnungsrichtung des Abdeckelements sich das Schubelement von dem Mitnehmer löst, so dass das mit dem Schubelement gekoppelte Abdeckelement zum Freigeben der Öffnung des Fahrzeugs in seine Ausgangsstellung zurückbewegbar ist, in der die abzudeckende Öffnung freigegeben ist.

Gleichzeitig ist vorteilhafterweise vorgesehen, dass die Verbindungsvorrichtung beim Bewegen des mit dem Übertragungsmittel gekoppelten Mitnehmers in seine Ausgangsstellung - entsprechend der Stellung bei maximal geöffnetem Abdeckelement - die zuvor gelöste Verbindung zwischen dem Mitnehmer und dem Schubelement automatisch wieder herstellt. Nachdem bei einem Einklemmfall somit die Verbindung zwischen dem Schubelement und dem Mitnehmer gelöst worden ist, wird der Mitnehmer einfach in seine Ausgangsstellung zurück verfahren und auf diese Weise die Verbindung zwischen dem Mitnehmer und dem Schubelement automatisch wieder hergestellt.

In einer vorteilhaften Ausgestaltung ist die Verbindungsvorrichtung zur Verbindung des Schubelements mit dem Mitnehmer durch ein Clipselement an dem Schubelement und ein federelastisches Element an dem Mitnehmer ausgebildet. Das Schubelement wird mittels des an dem Schubelement angeordneten Clipselementes in dem federelastischen Element des Mitnehmers gehalten, wobei die Verbindung zwischen dem Schubelement und dem Mitnehmer kraftabhängig bei einer auf das Schubelement ausgeübten Druckkraft in Öffnungsrichtung oder einer auf das Schubelement ausgeübten Zugkraft in Schließrichtung lösbar ist. Wesentlich bei dieser Ausgestaltung der Verbindungsvorrichtung ist, dass eine beidseitige Lösbarkeit der Verbindung zwischen dem Mitnehmer und dem Schubelement sowohl bei Ausüben einer Druckkraft als auch bei Ausüben einer Zugkraft vorgesehen ist. Die Verbindungsvorrichtung ermöglicht auf diese Weise, dass bei Ausüben einer Druckkraft das Schubelement aus dem Mitnehmer herausgedrückt und bei Ausüben einer Zugkraft aus dem Mitnehmer herausgezogen wird. Die Verbindungsvorrichtung ermöglicht somit zum einen das Vorsehen eines Einklemmschutzes, indem das Clipselement am Schubelement und das federelastische Element am Mitnehmer auf einen Einklemmfall abgestimmt sind und sich bei Übersteigen einer bestimmten Druckkraft voneinander lösen, und zum anderen eine Demontage, indem durch Aufwendung einer Zugkraft das Schubelement aus dem Mitnehmer entfernt werden kann.

In einem zweiten Abschnitt ist das Führungsmittel bevorzugt in seiner Formgebung zur Führung des Schubelements angepasst. In dem zweiten Abschnitt erfolgt die Führung des Schubelements hierbei ohne einen Mitnehmer, wobei das Schubelement direkt mit dem Führungsmittel zusammenwirkt und das Schubelement gleitend in dem Führungsmittel geführt ist. Das Führungsmittel kann zu diesem Zweck in dem zweiten Abschnitt abschnittsweise verengt ausgebildet sein, wobei in den verengten, Einschnürungen darstellenden Stellen das Führungsmittel der Formgebung des stangenförmig ausgebildeten Schubelements angepasst ist und auf diese Weise das Schubelement spiel- und klapperfrei führt. Über die Führung des Schubelements in dem zweiten Abschnitt des Führungsmittels kann auch bewirkt werden, dass das Schubelement, das zu diesem Zweck beispielsweise als zumindest abschnittsweise elastisches, aber drucksteifes Stangenelement ausgebildet ist, relativ zum ersten Abschnitt des Führungsmittels vorgespannt ist, um somit insbesondere bei einem durch einen einseitig offenen Führungskanal ausgebildeten Führungsmittel eine sichere und zuverlässige Führung des Schubelements in dem ersten Abschnitt des Führungsmittels zu erreichen.

Das aus dem ersten Abschnitt und dem zweiten Abschnitt bestehende Führungsmittel ist vorteilhafterweise einstückig ausgebildet. Der erste Abschnitt und der zweite Abschnitt des Führungsmittels sind miteinander verbunden und bilden ein einstückiges Bauteil, in dem das Schubelement geführt ist.

Alternativ kann das Führungsmittel einen ersten Abschnitt und einen zweiten Abschnitt aufweisen, die als separate Bauteile ausgeführt sind, wobei der erste Abschnitt mit dem Antrieb und der Umlenkung verbunden ist und zur Führung des Mitnehmers dient und der zweite Abschnitt als zusätzliches Bauteil zur Abschirmung des Schubelements vor Verschmutzung und Feuchtigkeit vorgesehen ist. Beispielsweise erstreckt sich bei Verwendung der Antriebsvorrichtung für ein Sonnenrollo einer Fahrzeugtür der zweite Abschnitt des Führungsmittels durch eine Türbrüstung und führt das Schubelement im Bereich der Türbrüstung und schirmt es gleichzeitig gegen Verschmutzung und Feuchtigkeit ab.

Um ein sicheres und zuverlässiges Betätigen des Abdeckelementes zu erreichen, ist das mit dem Schubelement gekoppelte Abdeckelement beim Schließen entgegen der Schließrichtung des Abdeckelements vorgespannt. Ist das Abdeckelement aus einem flexiblen, roll- und faltbaren Material, beispielsweise einem Textilstoff, hergestellt, wird auf diese Weise bewirkt, dass der Schließvorgang des Abdeckelements ohne ein Faltenschlagen des Abdeckelements erfolgt und das Abdeckelement in seiner Schließposition gespannt ist. Die Vorspannung auf das Abdeckelement kann beispielsweise durch eine auf eine Wickelwelle einwirkende Feder bewirkt werden, wobei das Abdeckelement in eingefahrenem Zustand auf die Wickelwelle aufgewickelt und zum Ausfahren von der Wickelwelle abgewickelt wird. Die vorspannende Feder wirkt dann dem Abwickeln des Abdeckelementes entgegen.

Weiterhin kann das Schubelement derart elastisch in dem Führungsmittel verspannt sein, dass die Verspannung beim Schließen des Abdeckelements in einem unteren Hubbereich größer als in einem oberen Hubbereich ist. In dem unteren Hubbereich, in dem sich das Abdeckelement in der Nähe seiner maximal geöffneten Stellung befindet, wirkt somit eine größere Spannung dem Schließvorgang des Abdeckelements entgegen als im einem oberen Hubbereich, in dem das Abdeckelement sich im Bereich seiner geschlossenen Stellung befindet. Dieser Maßnahme liegt der Gedanke zugrunde, dass in dem unteren Hubbereich die Verstellung des Abdeckelements durch den Antrieb in der Regel leichgängiger erfolgt als in dem oberen Hubbereich. Dadurch, dass in dem unteren Hubbereich somit eine relativ größere Verspannung des Schubelementes in dem Führungsmittel vorgesehen wird, wird die Leichtgängigkeit in dem unteren Hubbereich ausgeglichen und eine gleichmäßige Verstellung des Abdeckelements über seinen gesamten Hubbereich erzielt. Dieses empfindet insbesondere ein die Antriebsvorrichtung betätigender Fahrzeuginsasse als angenehm, da eine gleichmäßige Verstellung des Abdeckelements bei gleich bleibender Verstellkraft und -leistung erzielt wird und eine eventuelle Schwergängigkeit der Antriebsvorrichtung im oberen Hubbereich des Abdeckelements nicht wahrnehmbar ist.

In einer bevorzugten Ausgestaltung der Antriebsvorrichtung weist der Antrieb der Antriebsvorrichtung eine um eine Drehachse drehbare Wickelvorrichtung in Form einer Spindel oder einer Seiltrommel auf. Die Spindel oder die Seiltrommel sind hierbei ausgebildet, das Übertragungsmittel aufzunehmen, wobei die Spindel oder die Seiltrommel um die Drehachse drehbar gelagert sind und durch Drehung um die Drehachse das Übertragungsmittel auf- oder abwickeln. Durch das Auf- oder Abwickeln des Übertragungsmittels wird das mit dem Übertragungsmittel gekoppelte Schubelement zum Bewegen des Abdeckelements nach Art eines einsträngigen Seilfensterhebers angetrieben. Ob als Wickelvorrichtung eine Spindel oder eine Seiltrommel verwendet wird, ist insbesondere abhängig von der Art des verwendeten Übertragungsmittels. Ist das Übertragungsmittel durch ein Kunststoffseil mit einem kleinen Biegeradius ausgebildet, so wird vorteilhafterweise eine Spindel mit einem geringen Durchmesser verwendet, auf die das Kunststoffseil aufgewickelt wird. Wird hingegen als Übertragungsmittel ein Stahlseil verwendet, das in der Regel einen großen Biegeradius aufweist, also im Vergleich zum Kunststoffseil weniger biegsam ist, so wird vorteilhafterweise eine Seiltrommel mit einem relativ großen Durchmesser verwendet, auf die das Stahlseil aufgewickelt wird. Die Verwendung einer Spindel hat in diesem Zusammenhang den Vorteil, dass ein zusätzliches Untersetzungsgetriebe zwischen einem Motor des Antriebs und der Spindel nicht erforderlich ist, da eine Untersetzung bereits durch den geringen Durchmesser der Spindel und den dadurch erzielten geringen Hub pro Umdrehung der Spindel erreicht wird. Die Spindel kann daher direkt mit dem Motor gekoppelt und durch diesen angetrieben werden. Wird hingegen eine Seiltrommel verwendet, so ist in der Regel ein zusätzliches Untersetzungsgetriebe zwischen der Seiltrommel und dem Motor erforderlich.

Nach Art eines einsträngigen Seilfensterhebers weist das als Seil ausgebildete Übertragungsmittel zwei Enden auf, die mit der Wickelvorrichtung derart verbunden sind, dass eine Drehung der Wickelvorrichtung in die eine Umdrehungsrichtung ein Aufwickeln des Übertragungsmittels über das erste Ende und eine Drehung der Wickelvorrichtung in die andere Umdrehungsrichtung ein Aufwickeln des Übertragungsmittels über das zweite Ende bewirkt. Ein Aufwickeln des einen Endes geht dabei einher mit einem Abwickeln des anderen Endes, so dass das sich zwischen dem Antrieb und der Umlenkung im Führungsmittel hin und zurück erstreckende Übertragungsmittel bewegt wird, die Länge des sich im Führungsmittel erstreckenden Übertragungsmittel dabei konstant bleibt und der mit dem Übertragungsmittel verbundene Mitnehmer in dem Führungsmittel verschoben wird. Abhängig von der Drehrichtung der Wickelvorrichtung ist auf diese Weise das über den Mitnehmer mit dem Übertragungsmittel gekoppelte Schubelement in die Öffnungsrichtung oder in die Schließrichtung bewegbar, indem der Mitnehmer in dem Führungsmittel verschoben wird.

In einer vorteilhaften Ausgestaltung weist das Schubelement an seinem aus dem Führungsmittel herausragenden Ende ein Verbindungselement auf, mittels dessen das Schubelement mit dem Abdeckelement verbindbar ist. Das Verbindungselement ist an dem von dem Mitnehmer abgewandten Ende des Schubelements angeordnet, stellt die Verbindung zwischen dem Schubelement und dem Abdeckelement her und bewirkt, dass bei Verschieben des Schubelements das Abdeckelement zusammen mit dem Schubelement bewegt wird. Durch ein Verschieben des Schubelements in die Schließrichtung wird das Abdeckelement somit zum Abdecken der Öffnung des Fahrzeugs verschoben.

Vorteilhafterweise ist im Bereich des Verbindungselements am Schubelement ein Anlageelement vorgesehen, das ausgebildet ist, das Schubelement entlang der Öffnung gleitend zu führen. Hintergrund ist hierbei, dass beispielsweise bei einem Sonnenrollo das Betätigen des Sonnenrollos nur möglich sein soll, wenn die abzudeckende Öffnung, beispielsweise die Fensteröffnung einer Fahrzeugtür, gleichzeitig durch eine Fensterscheibe verschlossen ist. Mittels des Anlageelements wird das Schubelement entlang der Fensterscheibe geführt und gleitet entlang der Fensterscheibe in eine Position, in der die Fensteröffnung durch das Abdeckelement abgedeckt ist.

Zusätzlich oder alternativ können Anlageelemente auch an dem Abdeckelement selbst, beispielsweise an einer Querstange, dem so genannten Spriegel, eines das Abdeckelement ausbildenden Sonnenrollos vorgesehen sein, wobei die zusätzlichen Anlageelemente ausgebildet sind, das Abdeckelement entlang der Öffnung gleitend zu führen. Auch die zusätzlichen Anlageelemente wirken mit einer die Öffnung verschließenden Scheibe zusammen und bewirken, dass das Abdeckelement entlang der durch die Scheibe verschlossenen Öffnung gleitend geführt wird.

Die Aufgabe wird auch durch eine Türbaugruppe einer Fahrzeugtür mit einer Antriebsvorrichtung der vorangehend beschriebenen Art zum Betätigen eines Sonnenrollos zum Abdecken einer Fensteröffnung der Fahrzeugtür gelöst.

Bevorzugt weist die Türbaugruppe zusätzlich eine Steuerungsvorrichtung auf, die ausgebildet ist, die Antriebsvorrichtung zu steuern, wobei die Steuerungsvorrichtung derart beschaffen ist, dass die Antriebsvorrichtung nur betätigbar ist, wenn die Fensteröffnung durch eine Fensterscheibe verschlossen ist. Beispielsweise kann die Steuerungsvorrichtung derart ausgelegt sein, dass vor Betätigung der Antriebsvorrichtung zunächst die Fensterscheibe geschlossen wird, um erst anschließend das Sonnenrollo in seine geschlossene Position zu bringen. Gleichzeitig kann vorgesehen sein, dass, wenn bei geschlossenem Sonnenrollo ein Öffnungsbefehl für die Fensterscheibe erfolgt, zunächst das Sonnenrollo automatisch geöffnet wird, um erst anschließend die Fensterscheibe zu verschieben. Die Steuerungsvorrichtung sieht zusätzlich bevorzugt einen Automatiklauf vor, der bewirkt, dass das Sonnenrollo bei einem Schließbefehl automatisch von seiner vollständig geöffneten in seine vollständig geschlossene Position gefahren und umgekehrt bei einem Öffnungsbefehl von seiner vollständig geschlossenen in seine vollständig geöffnete Position gebracht wird.

Die Aufgabe wird durch ein Verfahren zur Montage einer Antriebsvorrichtung der vorangehend beschriebenen Art gelöst. Erfindungsgemäß ist bei dem Verfahren vorgesehen, dass
- das Führungsmittel der Antriebsvorrichtung an dem Kraftfahrzeug angeordnet wird,
- das Schubelement in eine Montagerichtung in das Führungsmittel eingeschoben wird und
- das Schubelement über eine Verbindungsvorrichtung mit dem Übertragungsmittel der Antriebsvorrichtung verbunden wird.

Der dem Verfahren zur Montage der Antriebsvorrichtung zugrunde liegende Gedanke liegt darin, die Montage der Antriebsvorrichtung an einem Kraftfahrzeug zweizuteilen. Zunächst wird hierbei das Führungsmittel an dem Kraftfahrzeug angeordnet und befestigt. In einem darauf folgenden zweiten Schritt wird das Schubelement dann in das Führungsmittel eingesteckt und lösbar mit dem Führungsmittel verbunden. Auf diese Weise wird ermöglicht, dass das Schubelement, das an seinem einen Ende beispielsweise ein Verbindungselement zur Verbindung des Schubelements mit dem Abdeckelement aufweist, durch Teile des Fahrzeugs, beispielsweise durch eine Öffnung in einer Türbrüstung hindurch, mit dem Führungsmittel verbunden werden kann. Die Verbindung des Schubelementes mit dem Übertragungsmittel erfolgt beispielsweise über einen in dem Führungsmittel geführten Mitnehmer, indem das Schubelement über eine entsprechende Verbindungsvorrichtung in den Mitnehmer eingeclipst wird.

Vorteilhafterweise wird das Schubelement in einen ersten Abschnitt des Führungsmittels eingeschoben und über den Mitnehmer lösbar mit dem Übertragungsmittel gekoppelt. Über einen zweiten Abschnitt kann dann eine Dichtung des Schubelements gegenüber dem Fahrzeug erfolgen. Beispielsweise ist in diesem Zusammenhang denkbar, das Schubelement zur Montage der Antriebsvorrichtung an einer Fahrzeugtür durch eine Türbrüstung der Fahrzeugtür hindurch in den ersten, an der Fahrzeugtür angeordneten Abschnitt des Führungsmittels einzuschieben. Der zweite Abschnitt des Führungsmittels wird dann zur Abdichtung des Schubelements gegenüber einem Nassraum der Fahrzeugtür in eine Führungsöffnung der Türbrüstung eingesteckt. Wesentlicher Vorteil ist hierbei, dass eine einfache Montage der Antriebsvorrichtung am Fahrzeug ermöglicht wird, ohne wesentliche bauliche Veränderungen am Fahrzeug zur Anpassung an die Antriebsvorrichtung vornehmen zu müssen.

Die Aufgabe wird weiterhin durch ein Verfahren zur Montage eines Verstellsystems zum Abdecken einer Öffnung in einem Kraftfahrzeug, insbesondere eines Sonnenrollos, einer Kofferraumabdeckung oder einer Schiebedachabdeckung, nach dem Anspruch 4 gelöst. Das diesem Verfahren zugrunde liegende Verstellsystem umfasst dabei
- ein flächenhaftes Abdeckelement zum Abdecken der Öffnung in dem Kraftfahrzeug,
- eine Antriebsvorrichtung mit einem Antrieb, einem Führungsmittel und einem in dem Führungsmittel geführten, von dem Antrieb angetriebenen Mitnehmer und
- einem mit dem Antrieb zu koppelnden, länglich erstreckten Schubelement, das zum Bewegen des Abdeckelementes in montiertem Zustand an einem ersten Ende mit dem Mitnehmer und an einem zweiten Ende mit dem Abdeckelement verbunden ist.

Erfindungsgemäß werden zur Montage zunächst das Abdeckelement und die Antriebsvorrichtung am Kraftfahrzeug oder einem Fahrzeugteil angeordnet, und anschließend wird das Schubelement in das Führungsmittel eingeführt und mit seinem ersten Ende mit dem Mitnehmer und mit seinem zweiten Ende mit dem Abdeckelement verbunden.

Diesem Verfahren liegt die Erkenntnis zugrunde, dass das Schubelement bei typischen Türsystemen nicht zusammen mit der Antriebsvorrichtung an der Fahrzeugtür montiert werden kann, da die Antriebsvorrichtung innerhalb des Türkastens anzuordnen ist und das Schubelement erst bei fertig montierter Fahrzeugtür außerhalb des Türkastens mit dem Abdeckelement verbunden werden kann. Die Montage des Schubelementes erfolgt daher gemäß dem vorliegenden Verfahren in einem nachträglichen Arbeitschritt, nachdem die Antriebsvorrichtung und das beispielsweise auf einer Wickelwelle angeordnete, wickelbare Abdeckelement bereits an der Fahrzeugtür montiert worden sind, indem das Schubelement in den Türkasten und in das Führungsmittel der Antriebsvorrichtung eingeschoben und an seinem einen Ende mit dem Mitnehmer und seinem anderen Ende mit dem Abdeckelement verbunden wird. Die Montage erfolgt somit modular: zunächst werden die Antriebsvorrichtung und das Abdeckelement separat an dem Fahrzeug oder der Fahrzeugtür angeordnet, um anschließend über das Schubelement miteinander verbunden zu werden.

Ist das flächige Abdeckelement auf einer Wickelwelle angeordnet, so wird das Schubelement mit einem von der Wickelwelle abliegenden Rand des beispielsweise als Sonnenrollo ausgebildeten Abdeckelementes verbunden. Das Schubelement wirkt somit auf den freien, nicht mit der Wickelwelle verbundenen Rand des Abdeckelementes ein und überträgt eine Verstellkraft auf das Abdeckelement.

Die Verbindung des Schubelementes mit dem Mitnehmer ist vorteilhafterweise lösbar ausgebildet, so dass die Verbindung nach der Montage beispielsweise zur Demontage oder bei einer übermäßigen Krafteinwirkung infolge eines Einklemmfalles gelöst werden kann.

Die Verbindung des Schubelementes mit dem Mitnehmer kann beispielsweise als Clipsverbindung ausgebildet sein. Bevorzugt erfordert das Einclipsen zum Herstellen der Verbindung zwischen dem Schubelement und dem Mitnehmer dabei einen geringeren Kraftaufwand als das Ausclipsen zum Lösen der Verbindung, so dass die Montage des Schubelementes einerseits leicht und ohne großen Kraftaufwand möglich ist, die Demontage andererseits aber erst nach Aufbringen einer vorbestimmten größeren Kraft erfolgen kann. Auf diese Weise wird einer ungewollten Demontage vorgebeugt und die Betriebssicherheit erhöht. Vorteilhafterweise ist das Einclipsen dabei, insbesondere zur Erhöhung der Bedienerfreundlichkeit, hörbar und/oder fühlbar, so dass dem Bediener die Herstellung der Verbindung zwischen dem Mitnehmer und dem Schubelement unmittelbar und deutlich angezeigt wird.

Alternativ kann die Verbindung des Schubelementes mit dem Mitnehmer auch als Schraubverbindung ausgebildet sein, wobei das Schubelement an seinem ersten Ende ein Gewinde aufweist, das in eine Gewindeaufnahme am Mitnehmer zur Herstellung der Verbindung eingeschraubt wird.

Denkbar ist zudem, die Verbindung des Schubelementes mit dem Mitnehmer als Bajonett-Verbindung auszugestalten, die durch Drehen des Schubelements betätigt werden kann. Das Schubelement wird hierbei zur Montage in das Führungsmittel eingesteckt und durch eine Drehung um seine Längsachse mit dem Mitnehmer verbunden und kann zur Demontage durch eine umgekehrte Drehung dann wieder gelöst werden.

In einer Weiterbildung kann ein zusätzliches Führungselement vorgesehen sein, das vor der Montage auf das Schubelement aufgesteckt und nach dem Einführen des Schubelementes in das Führungsmittel der Antriebsvorrichtung mit dem Kraftfahrzeug oder dem Fahrzeugteil verbunden wird. Diesem liegt der Gedanke zugrunde, zusätzlich zum Führungsmittel der Antriebsvorrichtung eine weitere Stützstelle für das Schubelement am Fahrzeug zur Verfügung zu stellen, um so eine optimale Führung des Schubelementes am Fahrzeug zu erreichen.

Das zusätzliche Führungselement wird bei der vorangehenden Ausgestaltung nach Einstecken des Schubelementes in das Führungsmittel am Fahrzeug montiert. Alternativ kann jedoch auch vorgesehen sein, das zusätzliche Führungselement zuerst an dem Kraftfahrzeug oder dem Fahrzeugteil anzuordnen und anschließend das Schubelement in das Führungsmittel der Antriebsvorrichtung und das zusätzliche Führungselement einzuführen. In einer dritten alternativen Variante schließlich wird nach dem Einführen des Schubelementes in das Führungsmittel der Antriebsvorrichtung das zusätzliche Führungselement auf das Schubelement gesteckt, worauf anschließend an dem Schubelement ein Verbindungselement zur Verbindung des Schubelementes mit dem Abdeckelement angeordnet wird. Bei dieser letzten Variante erfolgt die Anbringung des zusätzlichen Führungselementes somit nachträglich, indem das zweite Ende des Schubelementes zunächst freigelassen und nach dem Aufstecken des zusätzlichen Führungselementes dann das Verbindungselement angebracht wird, wodurch gleichzeitig ein Abrutschen des Führungselementes vom Schubelement verhindert wird.

In einer weiteren Ausgestaltung ist das länglich erstreckte Schubelement an seinem ersten und zweiten Ende gleich ausgebildet, so dass das Schubelement sowohl mit dem ersten als auch mit dem zweiten Ende in das Führungsmittel einführbar ist. Das Schubelement kann somit beidseitig in das Führungsmittel eingesteckt und unabhängig von seiner Orientierung montiert werden. Durch die symmetrische Ausgestaltung des Schubelementes wird einem falschen Einbau infolge einer falschen Orientierung des Schubelementes vorgebeugt und somit die Montage erleichtert und die Fehleranfälligkeit reduziert.

Vorteilhafterweise ist das Schubelement in einer Transportposition, in der das Verstellsystem ausgeliefert wird, an einem das Abdeckelement aufnehmenden Rollokasten oder an einem mit dem Abdeckelement verbundenen Spriegel angeordnet und wird zur Montage von dem Rollokasten entfernt oder vom Spriegel verschwenkt, um mit dem Mitnehmer verbunden zu werden. Die Auslieferung des Schubelementes erfolgt somit nicht lose, sondern zusammen und einheitlich mit den übrigen Komponenten des Verstellsystems. Denkbar ist hierbei, dass das Schubelement gelenkig mit dem Spriegel verbunden ist, in der Transportposition parallel zum Spriegel angeordnet und ausgeliefert wird und zur Montage dann um 90° zum Spriegel verschwenkt wird, um in das Führungsmittel der Antriebsvorrichtung am Fahrzeug eingeschoben zu werden.

Alternativ ist auch möglich, das Schubelement zur Auslieferung in das Führungsmittel einzustecken, zur Montage dann zunächst aus dem Führungsmittel zu entnehmen und nach dem Anbringen des Führungsmittels dann in das Führungsmittel einzuführen.

Die Antriebsvorrichtung, bestehend aus dem Antrieb, dem Führungsmittel und dem Mitnehmer, kann als separate, vorprüfbare Einheit ausgeliefert werden. Dieses hat den Vorteil, dass die Antriebsvorrichtung bereits vor der Montage auf korrekte Funktionalität überprüft und dann als Einheit an dem Fahrzeug angeordnet werden kann. Denkbar ist jedoch selbstverständlich auch, die Antriebsvorrichtung in Einzelteilen auszuliefern und beispielsweise an einer Trägerplatte einer Fahrzeugtür zu montieren, wobei erst durch die Montage an der Trägerplatte eine funktionsfähige Einheit entsteht.

Der der Erfindung zugrunde liegende Gedanke soll nachfolgend anhand der in den Figuren dargestellten Ausführungsbeispiele näher erläutert werden. Es zeigen:
- Fig. 1: eine Frontalansicht einer Antriebsvorrichtung mit einem eine Spindel aufweisenden Antrieb für ein Sonnenrollo am Türinnenblech einer Fahrzeugtür;
- Fig. 2: eine frontale, teilweise transparente Ansicht lediglich der Antriebsvorrichtung gemäß Fig. 1 mit eingeschobenem Schubelement;
- Fig. 3: eine frontale, teilweise transparente Ansicht lediglich der Antriebsvorrichtung gemäß Fig. 1 mit ausgezogenem Schubelement;
- Fig. 4A: eine Detailansicht der freigeschnittenen Spindel, des Übertragungsmittels, des Mitnehmers und des Schubelements der Antriebsvorrichtung gemäß Fig. 2;
- Fig. 4B: eine vergrößerte Detailansicht des Bereichs A der Fig. 4A;
- Fig. 5A: eine perspektivische Ansicht einer Antriebsvorrichtung mit Einschnürungen in einem zweiten Abschnitt des Führungsmittels zur Führung des Schubelements;
- Fig. 5B: eine frontale, teilweise transparente Ansicht der Antriebsvorrichtung gemäß Fig. 5A;
- Fig. 5C: eine seitliche, teilweise transparente Ansicht der Antriebsvorrichtung gemäß Fig. 5A;
- Fig. 6A: eine Detailansicht des oberen Bereichs der Antriebsvorrichtung gemäß Fig. 5A bis Fig. 5C;
- Fig. 6B-6D: Querschnittansichten entlang der Linien I-I, II-II, III-III gemäß Fig. 6A;
- Fig. 7: eine perspektivische Detailansicht des Antriebs der Antriebsvorrichtung gemäß Fig. 5A bis 5C;
- Fig. 8: eine perspektivische Detailansicht des mit Einschnürungen versehenen zweiten Abschnitts des Führungsmittels der Antriebsvorrichtung gemäß Fig. 5A bis 5C;
- Fig. 9A: eine perspektivische Detailansicht des unteren Bereichs mit der Umlenkung und dem Mitnehmer der Antriebsvorrichtung gemäß Fig. 5A bis 5C;
- Fig. 9B: eine frontale, teilweise transparente Ansicht des unteren Bereichs mit der Umlenkung der Antriebsvorrichtung gemäß Fig. 5A bis 5C;
- Fig. 9C: eine perspektivische Detailansicht des Mitnehmers der Antriebsvorrichtung gemäß Fig. 5A bis 5C;
- Fig. 10: eine Explosionsdarstellung der Antriebsvorrichtung gemäß Fig. 5A bis 5C;
- Fig. 11: eine perspektivische Ansicht einer Variante der Antriebsvorrichtung gemäß Fig. 1 mit einem separat ausgebildeten zweiten Abschnitt des Führungsmittels;
- Fig. 12: eine perspektivische Darstellung der Anordnung gemäß Fig. 11 vor der Montage der Antriebsvorrichtung;
- Fig. 13A: eine seitliche, teilweise transparente Ansicht der Antriebsvorrichtung gemäß Fig. 11;
- Fig. 13B: eine seitliche, teilweise transparente Ansicht des oberen Abschnitts der Antriebsvorrichtung gemäß Fig. 13A, entsprechend Bereich C in Fig. 13A, in an einer Fahrzeugtür montiertem Zustand;
- Fig. 14A: eine perspektivische Ansicht einer Ausführungsform einer Antriebsvorrichtung mit einem eine Seiltrommel aufweisenden Antrieb;
- Fig. 14B: eine Frontalansicht der Antriebsvorrichtung gemäß Fig. 14A,
- Fig. 14C: eine Seitenansicht der Antriebsvorrichtung gemäß Fig. 14A;
- Fig. 15A: eine Querschnittansicht durch die Antriebsvorrichtung gemäß Fig. 14A;
- Fig. 15B: ein vergrößerter Ausschnitt des Bereichs C der Querschnittansicht gemäß Fig. 15A;
- Fig. 16A: eine Frontalansicht des freigeschnittenen Übertragungsmittels, des Mitnehmers, des Schubelements und der Seiltrommel der Antriebsvorrichtung gemäß Fig. 14A;
- Fig. 16B: eine Seitenansicht des freigeschnittenen Übertragungsmittels, des Mitnehmers, des Schubelements und der Seiltrommel der Antriebsvorrichtung gemäß Fig. 14A;
- Fig. 17: eine perspektivische Detailansicht der Seiltrommel der Antriebsvorrichtung gemäß Fig. 14A;
- Fig. 18: eine frontale, teilweise transparente Detailansicht der Seiltrommel der Antriebsvorrichtung gemäß Fig. 14A;
- Fig. 19: eine perspektivische Detailansicht des Mitnehmers der Antriebsvorrichtung gemäß Fig. 14A;
- Fig. 20A: eine frontale, teilweise transparente Detailansicht des Mitnehmers des Antriebsvorrichtung gemäß Fig. 14A,
- Fig. 20B: eine Querschnittansicht durch den Mitnehmer entlang der Linie IV-IV gemäß Fig. 20A;
- Fig. 21: eine Frontalansicht einer in eine Türmodulträgerplatte integrierten Antriebsvorrichtung für ein Sonnenrollo einer Fahrzeugtür;
- Fig. 22: eine perspektivische Teilansicht der in eine Türmodulträgerplatte integrierten Antriebsvorrichtung gemäß Fig. 21;
- Fig. 23: eine Seitenansicht des oberen Bereichs der in eine Türmodulträgerplatte integrierten Antriebsvorrichtung gemäß Fig. 21;
- Fig. 24: ein vergrößerter Ausschnitt des Bereichs D der Ansicht gemäß Fig. 23;
- Fig. 25: eine perspektivische Detailansicht der Spindel der Antriebsvorrichtung an der Türmodulträgerplatte der Fahrzeugtür gemäß Fig. 21;
- Fig. 26: eine perspektivische Teilschnittansicht des Mitnehmers in dem Führungsmittel an der Türmodulträgerplatte gemäß Fig. 25;
- Fig. 27: eine perspektivische Detailansicht eines Arretierungsmittels im unteren Bereich der Antriebsvorrichtung an der Türmodulträgerplatte;
- Fig. 28A: eine schematische Seitenansicht eines Sonnenrollos an einer Fahrzeugtür in ausgefahrenem Zustand;
- Fig. 28B: eine schematische Frontalansicht eines Sonnenrollos an einer Fahrzeugtür in ausgefahrenem Zustand und
- Fig. 29: eine schematische Seitenansicht eines Sonnenrollos an einer Fahrzeugtür in ausgefahrenem Zustand.

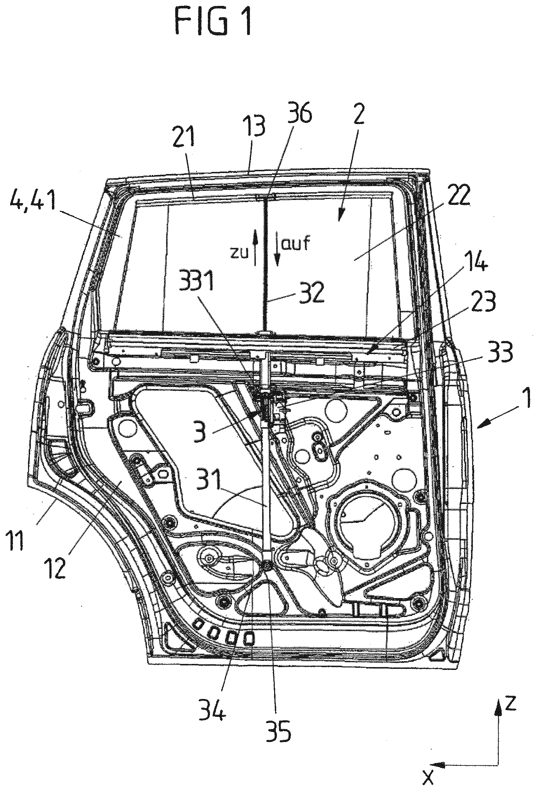

Fig. 1 zeigt eine Antriebsvorrichtung 3 in montiertem Zustand an einer Fahrzeugtür 1, die zur Betätigung eines Sonnenrollos 2 mit einer Querstange 21, dem so genannten Spriegel, des Sonnenrollos 2 verbunden ist und das Sonnerollo 2 zum Abdecken einer Fensteröffnung 4 der Fahrzeugtür 1 in eine Schließrichtung ZU nach oben oder zum Freigeben der Fensteröffnung 4 in eine Öffnungsrichtung AUF nach unten bewegt.

Bei der in Fig. 1 dargestellten Ausführungsform ist die Antriebsvorrichtung 3 am Türinnenblech 12 der Fahrzeugtür 1 angeordnet und über Befestigungsstellen 35, 336 im Bereich einer Umlenkung 34 am unteren Ende eines Führungsmittels 31 und im Bereich eines Antriebs 33 im oberen Bereich des Führungsmittels 31 der Antriebsvorrichtung 3 mit dem Türinnenblech 12 verbunden. In dem Führungsmittel 31 wird ein Schubelement 32 in Form einer Schubstange geführt, das sich aus dem Führungsmittel 31, das vollständig im Bereich des durch das Türaußenblech 11, das Türinnenblech 12 und eine das Türinnenblech 12 abdeckende Türinnenverkleidung (in Fig. 1 nicht dargestellt) gebildeten Türinnenraums der Fahrzeugtür 1 angeordnet ist, in den Bereich der Fensteröffnung 4 erstreckt und an seinem oberen Ende über ein Verbindungselement 36 mit dem Spriegel 21 des Sonnenrollos 2 verbunden ist. Das Schubelement 32 ist drucksteif und derart biegesteif ausgeführt, dass es das Sonnenrollo 2 auch bei Ausfahren aus dem Führungsmittel 31 in den Bereich der Fensteröffnung 41 verschieben und halten kann.

Das Sonnenrollo 2 ist in seiner Formgebung der Fensteröffnung 4 angepasst und verdeckt in geschlossenem Zustand, in dem der Spriegel 21 des Sonnenrollos 2 an einem oberen Rahmenelement des Fensterrahmens 13 der Fahrzeugtür 1 anliegt, die Fensteröffnung 4 nahezu vollständig. Das Sonnenrollo weist einen Behang 22 auf, der mit dem Spriegel 21 verbunden ist und aus einem Material, insbesondere einem Textilstoff besteht, das derart beschaffen ist, dass der Innenraum vor Sonneneinstrahlung geschützt ist. Der Behang 22 ist beispielsweise aus einem blick- und lichtdichten Material ausgebildet, das den Innenraum vollständig vor Sonneneinstrahlung abschirmt. Der Behang 22 kann aber auch aus einem teilweise transparenten Material ausgebildet sein, dass die Sonneneinstrahlung lediglich dämpft.

Dies geht von dem Gedanken aus, eine Antriebsvorrichtung 3 zur Betätigung eines Abdeckelementes 2, beispielsweise eines Sonnenrollos, nach Art eines einsträngigen Seilfensterhebers auszubilden. Insbesondere ist hierbei ein Übertragungsmittel 38 vorgesehen, das den Antrieb 33 mit dem Schubelement 32 verbindet, sich zumindest abschnittsweise in dem Führungsmittel 31 erstreckt und somit weitestgehend in dem Führungsmittel 31 eingefasst ist. Im Betrieb bewegt der Antrieb 33 das Übertragungsmittel 38 und über das Übertragungsmittel 38 das Schubelement 32 und bewegt somit das Abdeckelement in Form des Sonnenrollos 2 in Schließrichtung ZU in seine geschlossene Position oder in Öffnungsrichtung AUF aus seiner geschlossenen Position heraus.

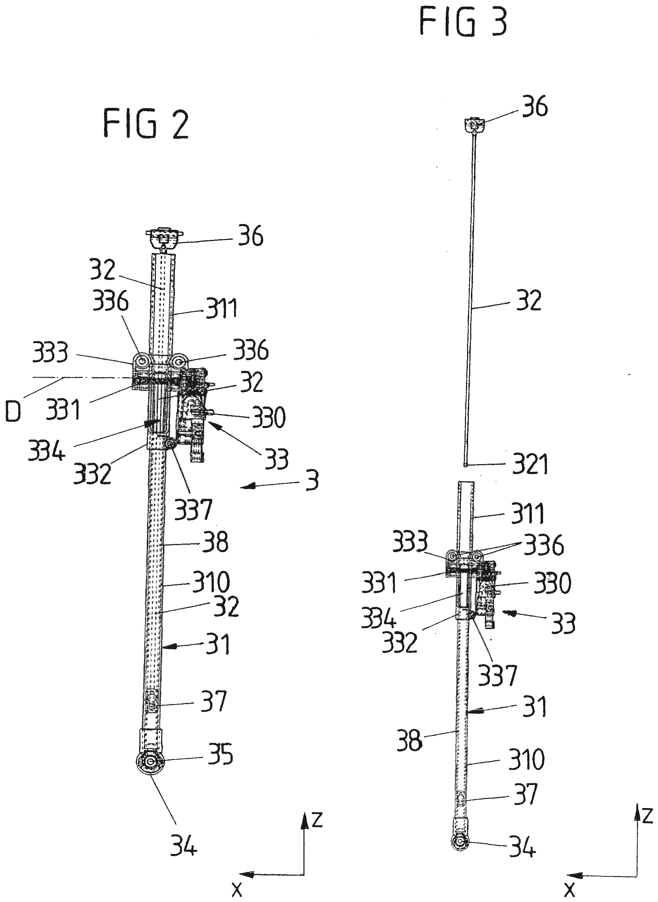

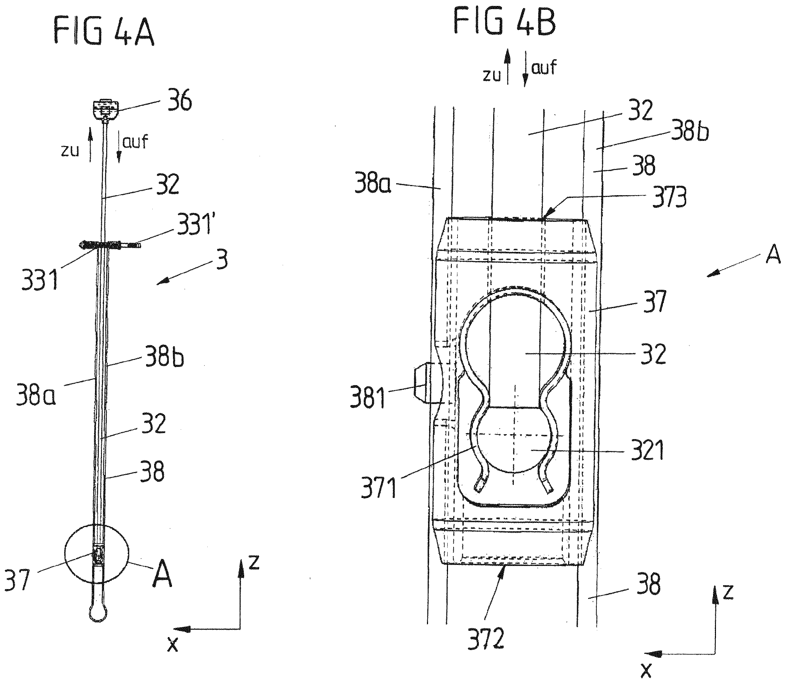

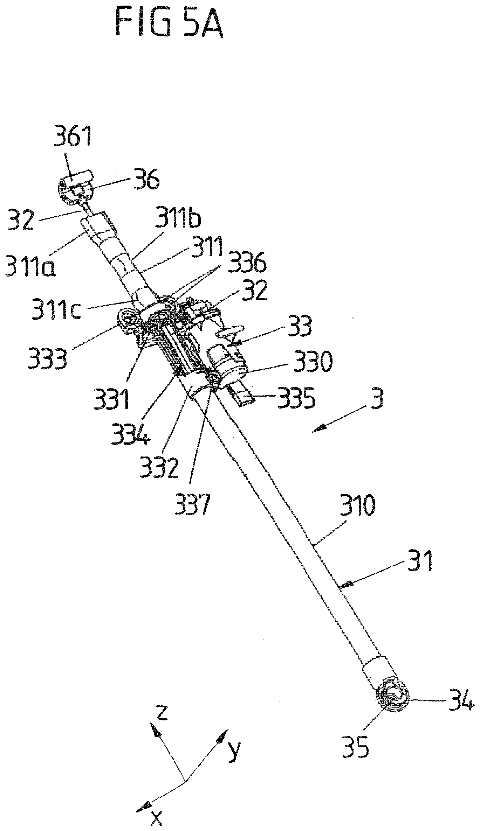

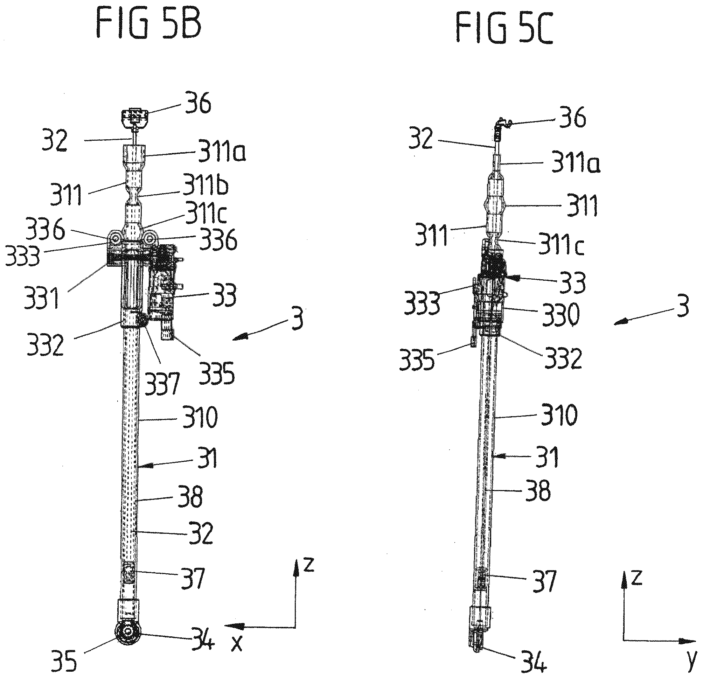

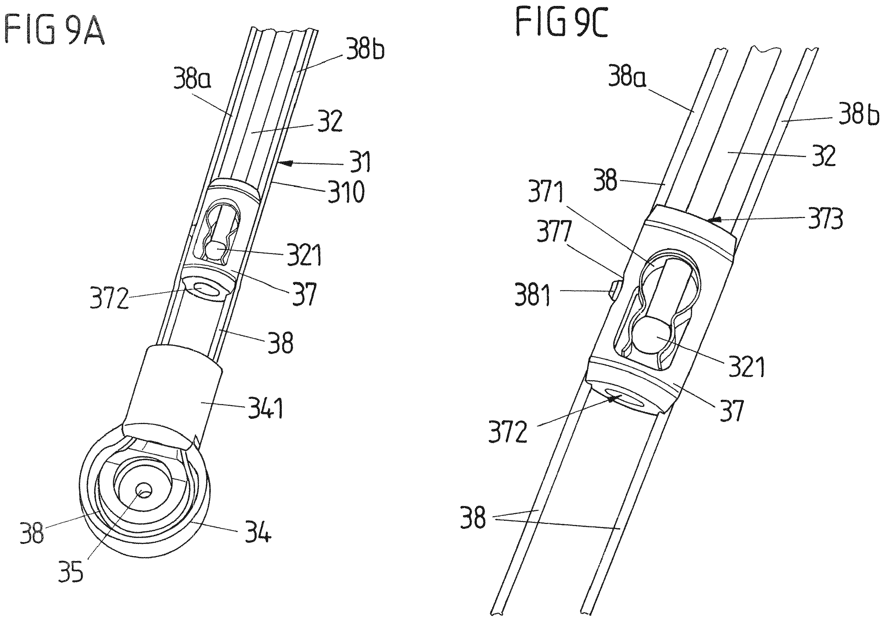

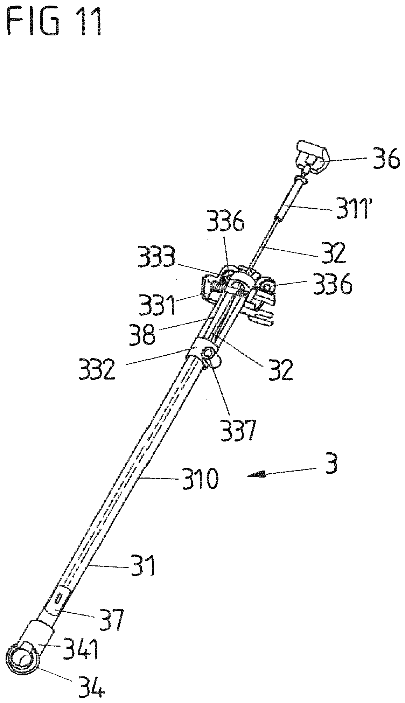

In Fig. 2 bis Fig. 13 sind Varianten einer ersten Ausführungsform der Antriebsvorrichtung 3 gemäß Fig. 1 dargestellt, bei der ein Antrieb 33 mit einer Spindel 331 Verwendung findet. Bauteile gleicher Funktionen sind dabei, soweit zweckdienlich, mit gleichen Bezugszeichen versehen. Die dargestellten Varianten unterscheiden sich lediglich in der Ausbildung eines zweiten Abschnitts 311 bzw. 311' des Führungsmittels 31, sind ansonsten aber bau- und funktionsgleich. Fig. 2 und 3 zeigen hierbei eine erste, Fig. 5 bis 8 und 10 eine zweite und Fig. 11 bis 13 eine dritte Variante der Antriebsvorrichtung 3. Fig. 4 zeigt eine Detailansicht eines Mitnehmers 37 und Fig. 9A bis 9C Detailansichten einer Umlenkung 34, die jeweils bei allen Varianten gemäß Fig. 2 bis 13 Verwendung finden.

Die Antriebsvorrichtung 3 gemäß Fig. 2 bis Fig. 13 weist einen Antrieb 33, ein Führungsmittel 31, ein Übertragungsmittel 38 in Form eines Seils und ein Schubelement 32 in Form einer Zugstange auf. Das Übertragungsmittel 38 ist mit einem Mitnehmer 37 verbunden und über den Mitnehmer 37 mit dem Schubelement 32 gekoppelt.

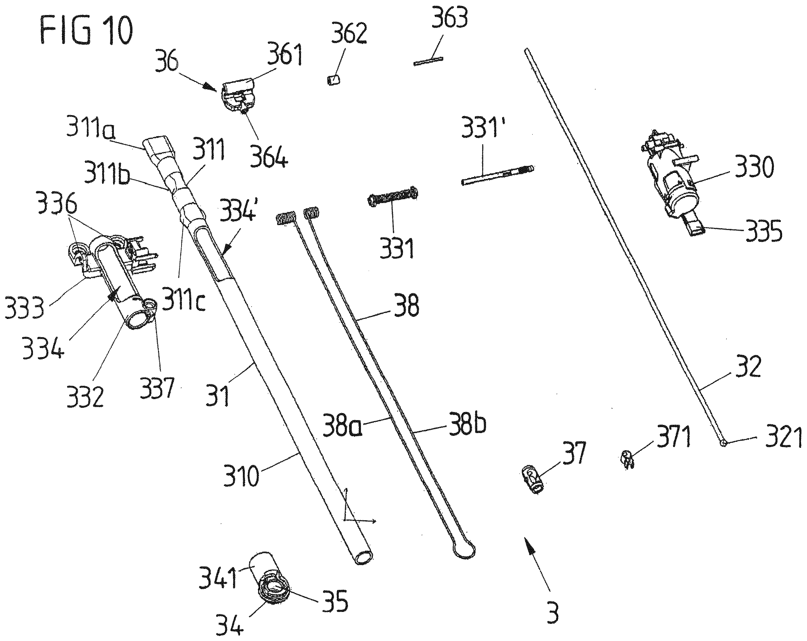

Das Schubelement 32, das, wie beispielsweise in Fig. 3 und Fig. 10 dargestellt ist, stangenförmig und drucksteif ausgebildet ist, wird in dem Führungsmittel 31 der Antriebsvorrichtung 3 geführt. Das Führungsmittel 31 weist in seinem unteren Bereich einen ersten Abschnitt 310 auf, in dem das Schubelement 32 über den Mitnehmer 37 gleitend gelagert ist. Der Mitnehmer 37 wird durch das Übertragungsmittel 38 zwischen einer Ausgangsstellung, in der der Mitnehmer 37 im Bereich der Umlenkung 34 angeordnet ist, und einer Endstellung, in der der Mitnehmer 37 im Bereich des Antriebs 33 der Antriebsvorrichtung 3 angeordnet ist, bewegt, wobei in der Ausgangsstellung, also wenn der Mitnehmer 37 im Bereich der Umlenkung 34 angeordnet ist, das Schubelement 32 vollständig oder zumindest weitestgehend in das Führungsmittel 31 eingeschoben ist (wie in Fig. 2 und Fig. 5 dargestellt) und das Sonnenrollo 2 geöffnet ist, während in der Endstellung das Schubelement 32 weistestmöglich aus dem Führungsmittel 31 heraus geschoben ist und sich das Sonnenrollo 2 in seiner geschlossenen, abdeckenden Position befindet (siehe Fig. 1).

Das Übertragungsmittel 38 erstreckt sich von einer Spindel 331 des Antriebs 33 ausgehend durch einen Freischnitt 334 in das Führungsmittel 31, verläuft von der Spindel 331 im Führungsmittel 31 zu einer Umlenkung 34 an einem unteren Ende des Führungsmittel 31, wird durch die Umlenkung 34 umgelenkt und verläuft von der Umlenkung 34 in dem Führungsmittel 31 zurück zur Spindel 331 des Antriebs 33.

Das Übertragungsmittel 38 ist, wie in der Darstellung der Fig. 4A und Fig. 10 ersichtlich ist, an seinen beiden Enden mit der Spindel 331 verbunden und bildet zwei Seilstücke 38a, 38b aus, die parallel zueinander im Führungsmittel 31 der Antriebsvorrichtung 3 verlaufen.

Nachfolgend sollen anhand von Fig. 2 bis 13 der Mitnehmer 37, der Antrieb 33 und die Umlenkung 34, die bei den Varianten gemäß Fig. 2 bis Fig. 13 gleich ausgebildet sind, im Einzelnen erläutert werden.

Zur Kopplung mit dem Schubelement 32 ist das Übertragungsmittel 38 mit dem Mitnehmer 37 verbunden, der wiederum mit dem Schubelement 32 gekoppelt ist. Fig. 4B und Fig. 9C zeigen Detailansichten des Mitnehmers 37. Der Mitnehmer 37 ist an seiner einen Seite über einen Seilnippel 381 mit dem einen Seilstück 38a des Übertragungsmittels 38 fest verbunden, so dass sich der Mitnehmer 37 bei Bewegung des Seilstücks 38a mit dem Seilstück 38a bewegt. Wird somit das Übertragungsmittel 38 durch die Spindel 331 derart bewegt, dass sich das Seilstück 38a in Fig. 4B nach oben und das Seilstück 38b nach unten bewegt, so bewegt sich der Mitnehmer 37 mit dem Seilstück 38a zusammen nach oben.

Der Mitnehmer 37 ist mit dem Schubelement 32 in Form der Schubstange verbunden und stellt die Verbindung zwischen dem Schubelement 32 und dem Übertragungsmittel 38 her. Der Mitnehmer 37 weist, wie in Fig. 4B dargestellt ist, ein federelastisches Element 371 auf, das in seinem oberen Bereich fest mit dem Mitnehmer 37 verbunden ist und in seinem unteren Bereich federelastisch ausgebildet ist. Der Mitnehmer 37 weist an seinem oberen Ende und an seinem unteren Ende jeweils eine Öffnung 372 bzw. 373 auf, durch die das Schubelement 32 in den Mitnehmer 37 eingeschoben werden kann. Am unteren Ende des Schubelements 32 ist ein Clipselement 321 in Form einer Kugel ausgebildet, die mit dem federelastischen Element 371 des Mitnehmers 37 in Eingriff bringbar ist, so dass das Schubelement 32 in dem Mitnehmer 37 gehalten wird.

Die Verbindung zwischen dem Schubelement 32 und dem Mitnehmer 37 ist bevorzugt lösbar ausgebildet. Bei der Ausgestaltung gemäß Fig. 4B kann das Schubelement 32 durch die obere Öffnung 373 des Mitnehmers 37 in den Mitnehmer eingeschoben werden - beispielsweise zur Montage - und wird mit dem federelastischen Element 371 des Mitnehmers 37 in Eingriff gebracht, indem das Clipselement 321 am unteren Ende des Schubelements 32 in das federelastische Element 371 des Mitnehmers 37 einrastet. Dadurch, dass das federelastische Element 371 elastisch ausgebildet ist, kann das Schubelement 32 - beispielsweise zur Demontage - aus dem Mitnehmer 37 gelöst werden, indem das Schubelement 32 aus dem Mitnehmer 37 gezogen und das Clipselement 321 am Schubelement 32 somit außer Eingriff mit dem federelastischen Element 371 des Mitnehmers 37 gebracht wird.

Die Verbindungsvorrichtung in Form des federelastischen Elements 371 und des Clipselements 321 des Mitnehmers 37 bzw. des Schubelements 32 ist derart ausgelegt, dass nicht nur ein Lösen der Verbindung bei Ausübung einer Zugkraft auf das Schubelement 32 in Schließrichtung ZU erfolgt, sondern die Verbindung zwischen dem Schubelement 32 und dem Mitnehmer 37 auch bei Ausübung einer Druckkraft in Öffnungsrichtung AUF gelöst werden kann. Bei Ausüben einer Druckkraft in Öffnungsrichtung AUF wird das Schubelement 32 nach unten gedrückt, so dass das Clipselement 321 außer Eingriff mit dem federelastischen Element 371 gerät und das Schubelement 32 durch das federelastische Element 371 und durch die Öffnung 372 im unteren Bereich des Mitnehmers 37 gedrückt wird.

Eine Lösbarkeit der Verbindung bei Ausübung entweder einer Zugkraft oder einer Druckkraft auf das Schubelement 32 vorzusehen, ist insbesondere zweckdienlich, um einen wirksamen Einklemmschutz zu gewährleisten. Wird bei Verfahren des Sonnenrollos 2 in Schließrichtung ZU ein Objekt zwischen dem Spiegel 21 des Sonnenrollos 2 und dem Fensterrahmen 13 der Fahrzeugtür 1 (siehe Fig.1) eingeklemmt, so erfährt das Schubelement 32 eine in Öffnungsrichtung AUF gerichtete Druckkraft. Das federelastische Element 371 ist hierbei derart ausgelegt, dass bei Überschreiten einer bestimmten Druckkraft in Schließrichtung AUF die Verbindung zwischen dem Schubelement 32 und dem Mitnehmer 37 gelöst und das Schubelement 32 durch den Mitnehmer 37 hindurch nach unten gedrückt wird. Das Sonnenrollo 2 ist dann nach unten bewegbar, so dass ein Einklemmen eines Objekts zwischen dem Sonnenrollo 2 und dem Fensterrahmen 13 verhindert ist. Das federelastische Element 371, das beispielsweise als Stahlfeder ausgebildet sein kann, bestimmt durch seine Steifigkeit die zum Lösen der Verbindung erforderliche Kraft und kann entsprechend zum Einklemmschutz auf die bei einem Einklemmfall auftretenden Kräfte abgestimmt sein.

Wie oben bereits erwähnt, ist das Übertragungsmittel 38 mit seinen beiden Enden mit der Spindel 331 des Antriebs 33 verbunden und erstreckt sich ausgehend von der Spindel 331 nach unten, wird durch die Umlenkung 34 umgelenkt und erstreckt sich zurück zur Spindel 331. Das Übertragungsmittel tritt durch den Freischnitt 334 in das Innere des Führungsmittels 31 ein und wird nahezu auf seiner vollständigen Länge im Inneren des Führungsmittels 31 geführt. Dadurch, dass das Übertragungsmittel 38 in das Führungsmittel 31 integriert ist, kann ein kompakter Ausbau der Antriebsvorrichtung 3 erreicht werden, wobei der erforderliche Bauraum minimiert und sowohl das Übertragungsmittel 38 als auch das Schubelement 32 durch das Führungsmittel 31 weitestgehend gegenüber Schmutz und Feuchtigkeit abgeschirmt sind.

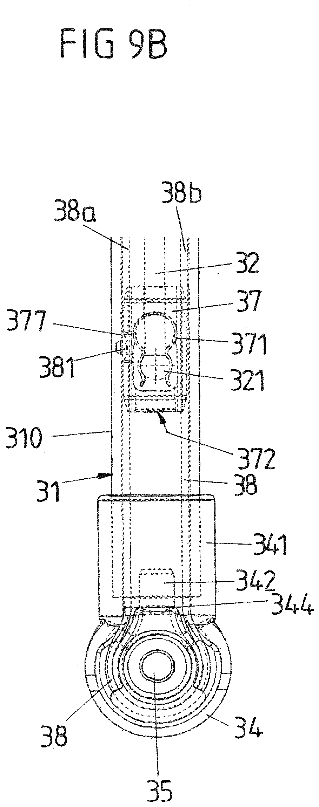

Fig. 9B zeigt eine Detailansicht der Umlenkung 34. Die Umlenkung 34 ist auf das untere Ende des Führungsmittels 31 aufgesteckt und weist einen Ansatz 341 auf, in den das Führungsmittel 31 eingesteckt ist, um eine Verbindung zwischen dem Führungsmittel 31 und der Umlenkung 34 herzustellen. Denkbar und vorteilhaft ist in diesem Zusammenhang, im Ansatz 341 ein federelastisches Element vorzusehen, das zwischen dem unteren Ende des Führungsmittels 31 und der Umlenkung 34 derart wirkt, dass das Führungsmittel 31 in die Erstreckungsrichtung Z des Führungsmittels 31 elastisch mit der Umlenkung 34 verbunden ist. Die elastische Verbindung kann hierbei zum Längenausgleich des Übertragungsmittels 38 dienen und bewirkt, dass, wenn das Übertragungsmittel 38 nicht hinreichend straff zwischen dem Antrieb 33 und der Umlenkung 34 gespannt ist, die Umlenkung 34 relativ zum Führungsmittel 31 entgegen der Z-Richtung nach unten gedrückt wird, so dass der Abstand zwischen der Umlenkung 34 und dem Antrieb 33 vergrößert und das Übertragungsmittel 38 somit gespannt wird.

Wie in Fig. 9B ersichtlich ist, weist die Umlenkung 34 einen Bolzen 342 auf, der im Bereich eines Anschlags 344 der Umlenkung 34 angeordnet ist. Der Anschlag 344 dient zur Definition der Ausgangsstellung des Mitnehmers 37 in dem Führungsmittel 31. In der Ausgangsstellung liegt die Unterkante des Mitnehmers 37 an dem Anschlag 344 an, und der Mitnehmer 37 befindet sich somit in einer unteren Stellung im Führungsmittel 31, in der das Schubelement 32 nahezu vollständig in das Führungsmittel 31 eingeschoben ist. In dieser Stellung durchgreift der als Arretierungsmittel dienende Bolzen 342 die Öffnung 372 im unteren Bereich des Mitnehmers 37, so dass der Mitnehmer 37 in dem Führungsmittel 31 festgesetzt ist. Die Festsetzung erfolgt derart, dass der Mitnehmer 37 durch den Bolzen 342 formschlüssig quer zur Erstreckungsrichtung Z des Führungsmittels 31 gehalten wird und der Mitnehmer 37 in dieser Stellung klapperfrei im Bereich der Umlenkung 34 angeordnet ist.

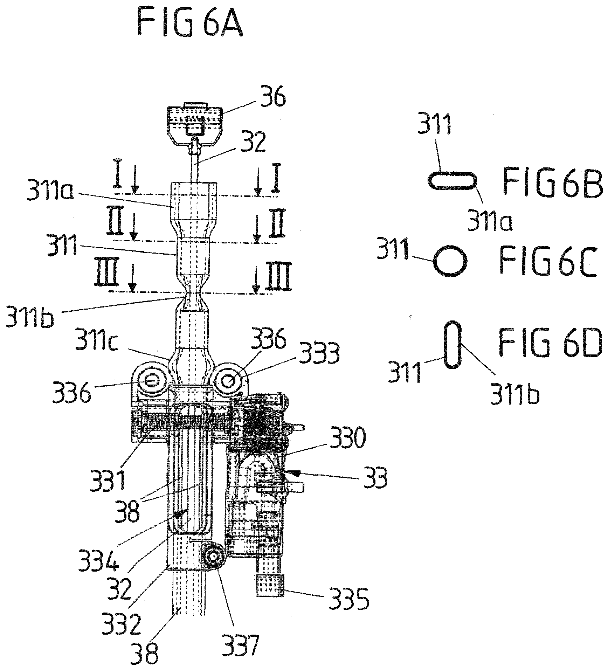

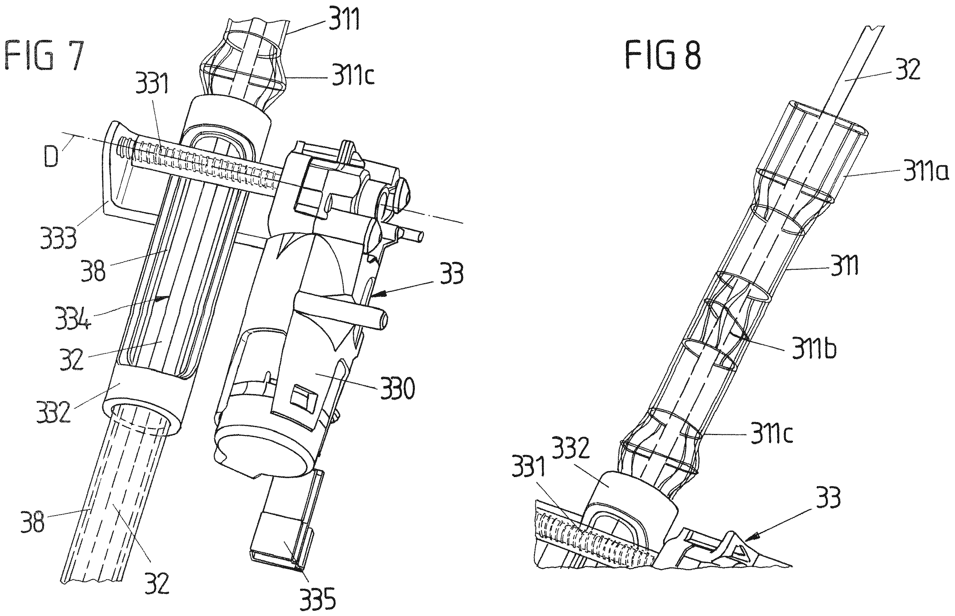

Fig. 6 und Fig. 7 zeigen den Antrieb 33 der Antriebsvorrichtung 3 im Detail. Das Übertragungsmittel 38 ist mit seinen beiden Enden mit der Spindel 331 des Antriebs 33 verbunden, wobei das Übertragungsmittel 38 zum Bewegen des Mitnehmers 37 über sein eines Ende aufgewickelt und über sein anderes Ende abgewickelt und auf diese Weise in dem Führungsmittel 31 bewegt wird. Der Antrieb 33 weist einen Motor 330 auf, der eine Antriebswelle 331' (siehe Fig. 10) antreibt und dadurch die Spindel 331 in eine Drehbewegung um eine Drehachse D (siehe Fig. 2 und Fig. 7), um die die Spindel 331 drehbar an einem Gehäusebasisteil 333 des Antriebs 33 gelagert ist, versetzt. Der Antrieb 33 weist weiterhin einen elektrischen Anschluss 335 auf, über den der Motor 330 elektrisch versorgt wird.

Die Spindel 331 weist, wie insbesondere in der vergrößerten Darstellung gemäß Fig. 7 und der Explosionsdarstellung gemäß Fig. 10 ersichtlich ist, an ihrem äußeren Umfang eine Schneckenverzahnung auf, die ausgebildet ist, die beiden mit der Spindel 331 verbundenen Enden des Übertragungsmittels 38 aufzunehmen. Das Übertragungsmittel 38 ist derart mit der Spindel 331 verbunden, dass ein Aufwickeln des Übertragungsmittels 38 über das eine Ende ein Abwickeln des Übertragungsmittels 38 über das andere Ende bewirkt. Dieses hat zur Folge, dass die Gesamtlänge des sich in den Führungsmitteln 31 erstreckenden Übertragungsmittels 38 konstant ist und durch das Aufwickeln des einen Endes bzw. Abwickeln des anderen Endes das Übertragungsmittel 38 in dem Führungsmittel 31 verschoben wird.

Die am äußeren Umfang der Spindel 331 angeordnete Schneckenverzahnung zur Aufnahme des Übertragungsmittels 38 ist derart beschaffen, dass die Enden des Übertragungsmittels 38 in geordneter Weise auf- bzw. abgewickelt werden, indem sich die Windungen des Übertragungsmittels 38 beim Aufwickeln geordnet in der Schneckenverzahnung aneinander anlegen, wie beispielsweise in Fig. 5A und Fig. 10 dargestellt ist.

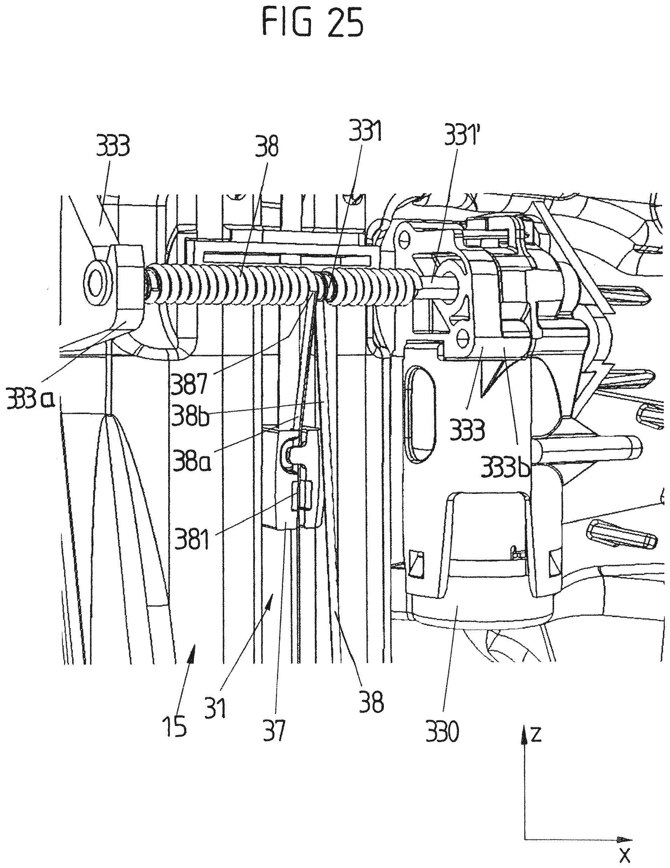

Die Wicklung des Übertragungsmittels 38 auf die Spindel 331 ist bevorzugt derart gestaltet, dass sich das Übertragungsmittel 38 in einer oberen Position des Mitnehmers 37, in der der Mitnehmer 37 in unmittelbarer Nähe der Spindel 331 angeordnet ist, senkrecht von der Spindel 331 zum Mitnehmer 37 hin erstreckt und der Ansatzpunkt des Übertragungsmittels 38 an der Spindel 331 sich somit unmittelbar oberhalb des Führungsmittels 31 befindet. Auf diese Weise wird bewirkt, dass in der oberen Position des Mitnehmers 37 sich das Übertragungsmittel 38 nicht schräg zwischen der Spindel 331 und dem Mitnehmer 37 erstreckt. Dieses ist vorteilhaft, da auf diese Weise auf den Mitnehmer 37 in der oberen Stellung sich im Wesentlichen längs zum Führungsmittel 31 erstreckende Kräfte übertragen werden und somit eine Einleitung von Querkräften auf den Mitnehmer 37 vermieden wird. Der Mitnehmer 37 in seiner oberen Position ist beispielsweise in Fig. 25 bei einer anderen, funktionell aber gleichwirkenden Ausführungsform der Antriebsvorrichtung 3 dargestellt.

Das Gehäusebasisteil 333 des Antriebs 33 dient zur Lagerung der Spindel 331 und zur Verbindung des Motors 330 über die Antriebswelle 331' mit der Spindel 331 und ist im Einzelnen in Fig. 7 dargestellt. Das Gehäusebasisteil 333 lagert die Spindel 331, die sich quer zur Erstreckungsrichtung des Führungsmittels 31 (entsprechend der Z-Richtung) in Richtung der Drehachse D erstreckt. Das Gehäusebasisteil 333 ist mit einer Hülse 332 verbunden, in die das Führungsmittel 31 zur Montage eingeschoben wird, um das Führungsmittel 31 mit dem Antrieb 33 zu verbinden. An der Hülse 332 ist eine Befestigungsstelle 337 ausgebildet, über die mittels einer Schraubverbindung die Hülse 332 klemmend mit dem Führungsmittel 31 verbunden ist. Am Gehäusebasisteil 333 sind weiterhin Befestigungsstellen 336 ausgebildet, über die die Antriebsvorrichtung 3 an der Fahrzeugtür 1 (siehe Fig. 1) befestigt wird.

Eine weitere Befestigungsstelle 35 ist an der Umlenkung 34 ausgebildet und dient zur Befestigung der Antriebsvorrichtung 3 im unteren Bereich des Führungsmittels 31 an der Fahrzeugtür 1.

Die Verwendung eines Antriebs 33 mit einer Spindel 331 zum Aufwickeln des Übertragungsmittels 38 ist insbesondere im Zusammenhang mit einem durch ein Kunststoffseil ausgebildeten Übertragungsmittel 38 zweckdienlich. Ein Kunststoffseil weist einen kleinen Biegeradius auf und kann somit in kleinen Windungen auf die Spindel 331 aufgewickelt werden. Die Verwendung einer Spindel 331 im Sinne der Varianten gemäß Fig. 2 bis Fig. 13 weist den Vorteil auf, dass zwischen dem Motor 330 und der Spindel 331 des Antriebs 33 kein zusätzliches Untersetzungsgetriebe vorgesehen werden muss. Dadurch, dass die Spindel 313 einen geringen Durchmesser aufweist, wird pro Umdrehung der Spindel 331 nur ein relativ kurzes Stück des Übertragungsmittels 38 auf die Spindel 331 aufgewickelt bzw. von der Spindel 331 abgewickelt, so dass eine Umdrehung der Spindel 331 in eine relativ kleine Wegstrecke des Übertragungsmittels 38 und somit des Mitnehmers 37 übertragen wird.

Bei den Varianten gemäß Fig. 2 bis Fig. 13 ist weiterhin vorgesehen, dass die Umlenkung des Übertragungsmittels 38 im Bereich des Antriebs 33 unmittelbar durch die Spindel 331 vorgenommen wird. Eine weitere Umlenkung zusätzlich zur Umlenkung 34 ist somit nicht erforderlich, was zum einen eine erhebliche Vereinfachung der Bauform der Antriebsvorrichtung 3 ermöglicht und zum anderen eine Wirkungsgradverbesserung durch Minimierung reibbehafteter Bauteile bewirkt.

Der Mitnehmer 37 wird in dem ersten Abschnitt 310 des Führungsmittels 31 geführt. Denkbar und vorteilhaft ist in diesem Zusammenhang, an der äußeren, der Wandung des Führungsmittels 31 zugewandten Umfangsfläche des im wesentlichen zylindrisch geformten Mitnehmers 37 ein oder mehrere elastische Elemente vorzusehen, mittels derer der Mitnehmer 37 quer zur Erstreckungsrichtung (entsprechend der Z-Richtung) des Führungsmittels 31 gedämpft in dem Führungsmittel 31 geführt wird. Ist der Mitnehmer 37 aus Kunststoff ausgebildet, so sind die elastischen Elemente beispielsweise mittels Zwei- Komponenten-Technik an den Mitnehmer 37 im Bereich seines äußeren Umfangs angespritzt und bewirken eine verspannende, dämpfende Querkraft zwischen dem Mitnehmer 37 und dem Führungsmittel 31. Die elastischen Elemente ermöglichen auf diese Weise eine spiel- und klapperfreie Führung des Mitnehmers 37 im ersten Abschnitt 310 des Führungsmittels 31.

Das Führungsmittel 31 dient zur Führung des Schubelements 32. Das Führungsmittel 31 erstreckt sich hierbei in montiertem Zustand ausschließlich außerhalb des Bereichs der Fensteröffnung 4, die durch das mit dem Schubelement 32 zu verbindende Abdeckelement - in Fig. 1 ist dies das Sonnenrollo 2 - abgedeckt werden soll. Durch Bewegen des Mitnehmers 37 wird das Schubelement 32 aus dem Führungsmittel 31 heraus und in den Bereich der abzudeckenden Öffnung 4 hinein verschoben.

Das Führungsmittel 31 weist, wie oben erläutert, einen ersten Abschnitt 310 auf, in dem der Mitnehmer 37 und das mit dem Mitnehmer 37 gekoppelte Schubelement 32 geführt werden. Zusätzlich weist das Führungsmittel 31 einen zweiten Abschnitt 311 bzw. 311', in dessen Ausbildung sich die Varianten der Antriebsvorrichtung 3 gemäß Fig. 2 bis 3, Fig. 5 bis 10 und Fig. 11 bis 13 unterscheiden.

Im ersten Abschnitt 310 des Führungsmittels 31 erfolgt die Führung des Schubelements 32 über den Mitnehmer 37. Gleichzeitig ist erforderlich, dass das Schubelement 32 auch im Bereich eines zweiten Abschnitts 311 bzw. 311' des Führungsmittels 31 derart geführt ist, dass der Verschiebungsweg des Schubelements 32 vollständig bestimmt ist. Bei den Varianten gemäß Fig. 2 bis 3, Fig. 5 bis 10 und Fig. 11 bis 13 wird dies auf unterschiedliche Weise erreicht.

Bei der Variante gemäß Fig. 2 bis Fig. 3 ist das Führungsmittel 31 im zweiten Abschnitt 311 rohrförmig ausgebildet, so dass das stangenförmige Schubelement 32 nicht am Führungsmittel 31 anliegt. Es ist daher erforderlich, einen zusätzlichen Führungspunkt des Schubelements 32 vorzusehen, der beispielsweise durch eine Führungsbuchse im Bereich der Türbrüstung 14 der Fahrzeugtür 1 und somit außerhalb des Führungsmittels 31 verwirklicht sein kann.

Bei der Variante gemäß Fig. 5 bis Fig. 10 hingegen ist das Führungsmittel 31 im zweiten Abschnitt 311 in seiner Formgebung derart angepasst, dass das Schubelement 32 in dem zweiten Abschnitt 311 des Führungsmittels 31 geführt wird. Wie in Fig. 5A bis 5C, Fig. 6 und Fig. 8 dargestellt ist, weist das Führungsmittel 31 im zweiten Abschnitt 311 Einschnürungen 311A, 311B, 311C auf, die im Querschnitt (siehe Fig. 6) länglich ausgebildet sind und in ihrer schmalen Weite dem Durchmesser des stangenförmigen Schubelements 32 entsprechen. Dadurch, dass die länglich ausgebildeten Einschnürungen 311A, 311 B, 311C in ihrer Ausrichtung quer zur Erstreckungsrichtung Z des Führungsmittels 31 jeweils im 90°-Winkel zueinander versetzt sind, wird eine vollständig bestimmte Führung quer zur Erstreckungsrichtung des Führungsmittels 31 im Bereich des zweiten Abschnitts 311 erreicht. Dieses wird insbesondere in den Querschnittsansichten gemäß Fig. 6B bis 6D deutlich, die das Führungsmittel 31 im Querschnitt entlang der Linie I-I, II-II, III-III gemäß Fig. 6A zeigen.

Bei der Variante gemäß Fig. 5 bis Fig. 10 wird somit das Schubelement 32 zusätzlich im zweiten Abschnitt 311 des Führungsmittels 31 geführt. Die Einschnürungen 311A, 311B, 311C im zweiten Abschnitt 311 des Führungsmittels 31 können dabei beispielsweise durch Heißverformung des aus Kunststoff ausgebildeten Führungsmittels 31 hergestellt sein.

Um eine Montage des Schubelementes 32 in dem Führungsmittel 31 zu ermöglichen, ist der zweite Abschnitt 311 im Bereich seiner Einschnürungen 311a, 311b, 311c bevorzugt hinreichend elastisch ausgebildet, so dass ein Einschieben des Schubelementes 32 mit dem am unteren Ende des Schubelementes 32 angeordneten Clipselement 321 in das Führungsmittel 31 möglich ist.

Bei den Varianten gemäß Fig. 2 bis Fig. 10 ist die Führungsschiene 31 mit ihrem ersten Abschnitt 310 und ihrem zweiten Abschnitt 311 einstückig ausgebildet. Bei der Variante gemäß Fig. 5 bis Fig. 10 bewirkt der mit dem ersten Abschnitt 310 verbundene, zweite Abschnitt 311 des Führungsmittels 31 eine Führung des Schubelements 32 auch oberhalb des Antriebs 33 und gewährleistet somit eine sichere Führung des Schubelements 32.

Eine dritte Variante der der Antriebsvorrichtung 3 ist in Fig. 11 bis Fig. 13 dargestellt. Im Gegensatz zu den Varianten gemäß Fig. 2 bis 3 bzw. Fig. 5 bis 10 ist das Führungsmittel 31 bei der Variante gemäß Fig. 11 bis Fig. 13 zweiteilig ausgebildet und weist einen zweiten Abschnitt 311' auf, der nicht mit dem ersten Abschnitt 310 des Führungsmittels 31 verbunden ist. Der zweite Abschnitt 311' ist in seinem Durchmesser dem Schubelement 32 angepasst und liegt am stangenförmigen Schubelement 32 an.

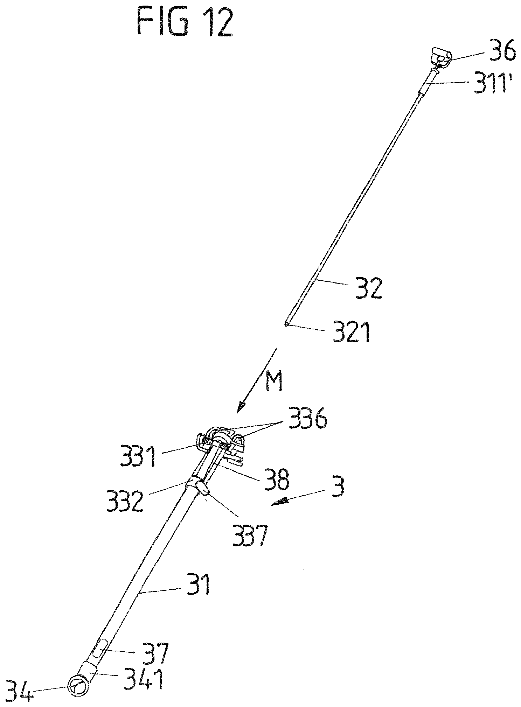

Wie in Fig. 12 dargestellt ist, wird das Schubelement 32 zur Montage zusammen mit dem auf das Schubelement 32 aufgesteckten zweiten Abschnitt 311' in den ersten Abschnitt 310 des Führungsmittels 31 in die Montagerichtung M eingeschoben und über das Clipselement 321 mit dem Mitnehmer 37 im ersten Abschnitt 310 des Führungsmittels 31 verbunden. Wie vorangehend bereits anhand von Fig. 4B erläutert worden ist, ist die Verbindung zwischen dem Schubelement 32 und dem Mitnehmer 37 lösbar und kann beispielsweise zur Demontage der Antriebsvorrichtung 3 aufgehoben werden, indem das Schubelement 32 entgegen der Montagerichtung M aus dem Mitnehmer 37 und somit aus dem Führungsmittel 31 gezogen wird. Gleichzeitig stellt die lösbare Verbindung eine Maßnahme zum Einklemmschutz dar, indem, wie anhand von Fig. 4B erläutert worden ist, die Verbindung zwischen dem Schubelement 32 und dem Mitnehmer 37 auch bei Aufwendung einer Druckkraft in die Montagerichtung M lösbar ist. Die Verbindung zwischen dem Mitnehmer 37 und dem Schubelement 32 ist hierbei derart ausgelegt, dass bei Überschreiten einer bestimmten Druckkraft sich die Verbindung automatisch löst, um somit ein Einklemmen eines Objekts zwischen einem durch das Schubelement 32 bewegten Abdeckelement - in Fig. 1 ist dies das Sonnenrollo 2 - zu verhindern.

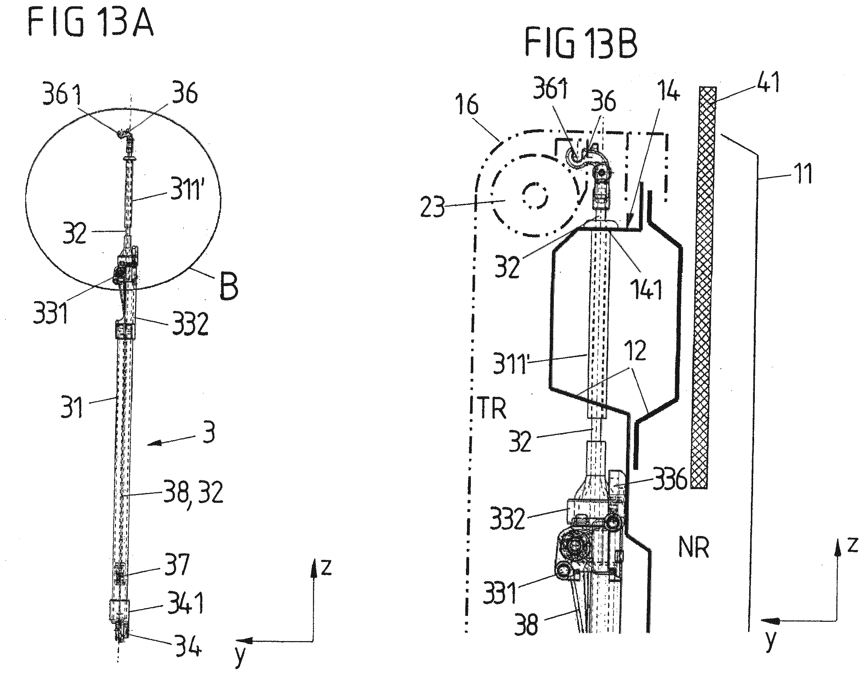

Der zweite Abschnitt 311' des Führungsmittels 31, der verschieblich an dem Schubelement 32 angeordnet ist, dient zum einen zur Führung des Schubelements 32 und zum anderen zur Abdichtung des Schubelements 32 gegenüber einem Eindringen von Verschmutzung und Feuchtigkeit von außen. Zu diesem Zweck wird, wie in Fig. 13A und insbesondere in der vergrößerten Darstellung gemäß Fig. 13B dargestellt ist, die Antriebsvorrichtung 3 derart am Fahrzeug (in diesem Fall der Fahrzeugtür 1) angeordnet, dass der zweite Abschnitt 311' einen Bereich des Fahrzeugs durchdringt und das Schubelement 32 gegenüber diesem Bereich abschirmt. Wie in Fig. 13B dargestellt ist, ist der zweite Abschnitt 311' insbesondere derart an einer Fahrzeugtür 1 angeordnet, dass er sich durch eine Türbrüstung 14 der Fahrzeugtür 1 erstreckt und zu diesem Zweck durch eine Führungsöffnung 141 in der Türbrüstung 14 geführt wird. Der zweite Abschnitt 311' bewirkt somit, dass das Schubelement 32 gegenüber einem im Nassraum NR der Fahrzeugtür 1 angeordneten Innenbereich der Türbrüstung 14 vor Schmutz und Feuchtigkeit abgeschirmt ist, und ermöglicht eine dichte Anordnung der Antriebsvorrichtung 3 an der Fahrzeugtür 1. Gleichzeitig stellt der zweite Abschnitt 311' eine Führung des Schubelements 32 im Bereich der Türbrüstung 14 her, indem der zweite Abschnitt 311' fest mit der Türbrüstung 14 verbunden ist und das Schubelement 32 in seinem Inneren gleitend führt.

Wie in Fig. 13B dargestellt ist, werden die übrigen Teile der Antriebsvorrichtung 3 in der Regel im Trockenraum TR der Fahrzeugtür 1 angeordnet und müssen somit nicht gesondert vor Feuchtigkeit geschützt werden. Dadurch, dass das Schubelement 32 und das Übertragungsmittel 38 nahezu vollständig in dem Führungsmittel 31 geführt werden, wird jedoch auch im Trockenraum TR der Fahrzeugtür 1 sichergestellt, dass die Antriebsvorrichtung 3 gegen Schmutz geschützt ist.

Am oberen Ende des Schubelementes 32 ist ein Verbindungselement 36 ausgebildet, dass einen Haken 361 aufweist, über den das Verbindungselement 36 mit der Querstange 21 des Sonnenrollos 2 verbindbar ist. Denkbar ist beispielsweise, dass der Haken 361 in eine Öse an der Querstange 21 des Sonnenrollos 2 eingreift, wobei die Verbindung des Hakens 361 mit der Öse lösbar ausgebildet ist und das Sonnenrollo 2 zur Verbindung mit dem Schubelement 32 in den Haken 361 eingehängt wird.

Wie in Fig. 13B dargestellt ist, ist das Sonnenrollo 2 in einem Rollokasten 23 im Bereich der Türbrüstung 14 der Fahrzeugtür 1 angeordnet und weist eine Wickelwelle 231 auf, auf die der Behang 22 des Sonnenrollos 2 aufgewickelt ist. Zur Betätigung zieht das Schubelement 32 den Behang 22 aus dem Rollokasten 23 in den Bereich der Fensteröffnung 4 und wickelt den Behang 22 somit von der Wickelwelle 231 ab.

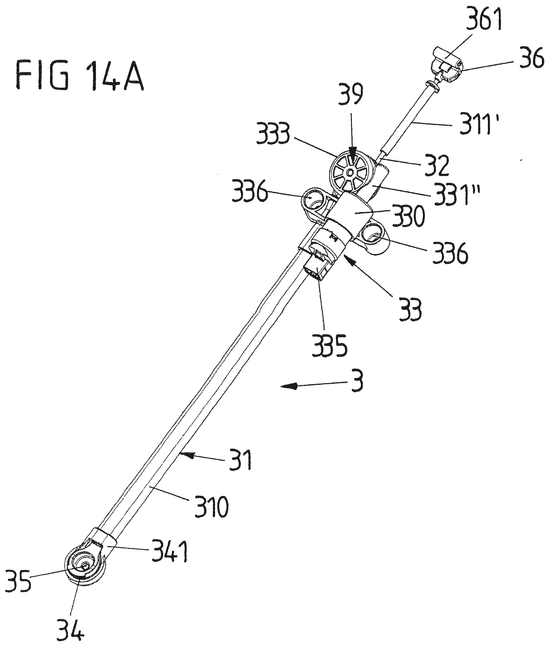

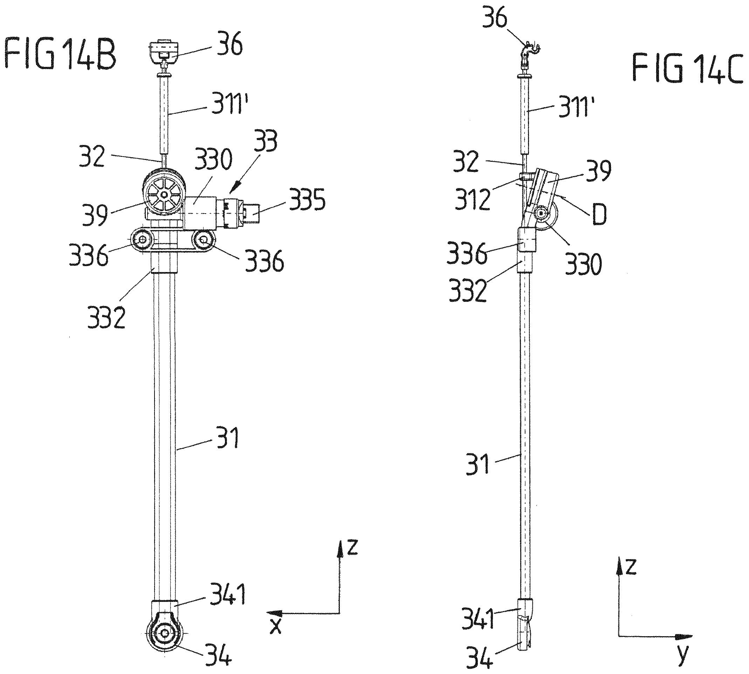

Wie oben ausgeführt, verwenden die Varianten der Antriebsvorrichtung 3 gemäß Fig. 2 bis Fig. 13 einen Antrieb 33 mit einer Spindel 331, auf die das Übertragungsmittel in Form eines Seils aufgewickelt ist. Anhand von Fig. 14 bis Fig. 20 soll nunmehr eine Ausführungsform der Antriebsvorrichtung erläutert werden, die einen Antrieb 33 mit einer Seiltrommel 39 anstelle der Spindel 331 verwendet.

Die Antriebsvorrichtung 3 gemäß Fig. 14 bis Fig. 20 ist insbesondere bei Verwendung eines Übertragungsmittels 38 in Form eines Stahlseils geeignet. Ein Stahlseil weist in der Regel einen relativ großen Biegeradius auf und kann somit nicht in kleinen Windungen aufgewickelt werden. Die Antriebsvorrichtung 3 gemäß Fig. 14 bis Fig. 20 verwendet daher eine Seiltrommel 39 mit einem relativ großen Durchmesser, auf die das Übertragungsmittel 38 in Form des Stahlseils aufgewickelt ist.

Die Antriebsvorrichtung 3 gemäß Fig. 14 bis Fig. 20 ist funktionell analog der Antriebsvorrichtung 3 gemäß Fig. 2 bis Fig. 13 aufgebaut und weist insbesondere einen Antrieb 33, ein Führungsmittel 31, ein Übertragungsmittel 38, ein Schubelement 32, einen Mitnehmer 37 zur Kopplung des Übertragungsmittels 38 mit dem Schubelement 32 und eine Umlenkung 34 auf. Unterschiede ergeben sich vor allem durch die Verwendung der Seiltrommel 39 im Antrieb 33.

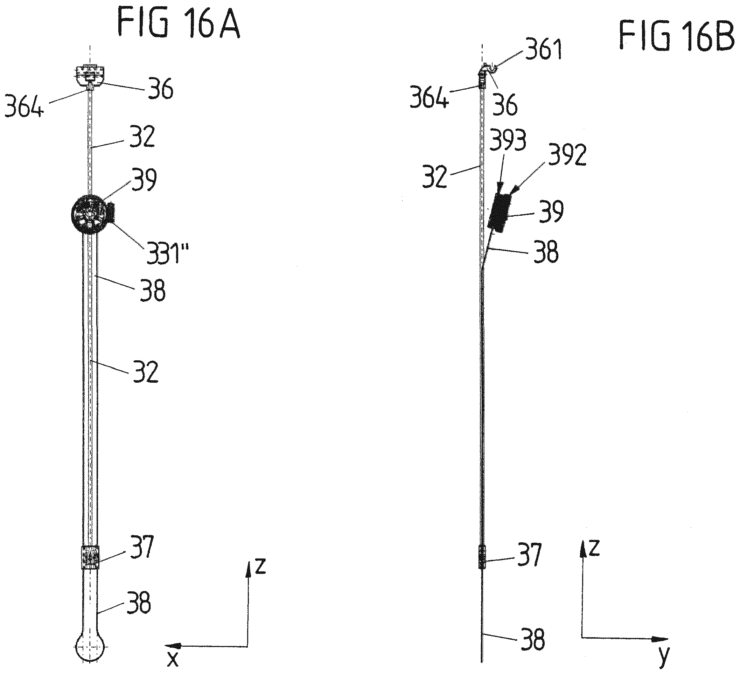

Die Antriebsvorrichtung 3 gemäß Fig. 14 bis Fig. 20 weist einen Antrieb 33 mit einem Motor 330 und einer durch den Motor 330 angetriebenen Antriebswelle 331" auf. Die Antriebswelle 331" weist, wie insbesondere in Fig. 16A dargestellt ist, eine Schneckenverzahnung im Bereich ihrer äußeren Umfangsfläche auf, die mit einer Verzahnung 392 am Umfang der Seiltrommel 39 in Eingriff steht. Die Antriebswelle 331" mit ihrer Schneckenverzahnung und die Seiltrommel 39 stellen ein Untersetzungsgetriebe dar, mittels dessen eine Umdrehung der Antriebswelle 331" in einen Bruchteil einer Umdrehung der Seiltrommel 39 untersetzt wird.

Unterschiedliche Anordnungen des Motors 330 relativ zur Seiltrommel 39 sind denkbar. In Fig. 14A ist zum einen eine Anordnung dargestellt, in der der Motor 330 zusammen mit der Antriebswelle 331" sich parallel zum Führungsmittel 31 erstreckt, wobei die Antriebswelle 331" mit der Seiltrommel 39 in Eingriff steht. In Fig. 14B und Fig. 14C ist hingegen eine Variante dargestellt, in der der Motor 330 quer zum Führungsmittel 31 angeordnet ist, so dass sich die Antriebswelle 331" vom Motor 330 ausgehend quer zum Führungsmittel 31 erstreckt und mit der Seiltrommel 39 in Eingriff steht. Grundsätzlich ist die Funktionsweise des Antriebs 33 unabhängig von der Anordnung und Ausrichtung des Motors 330.

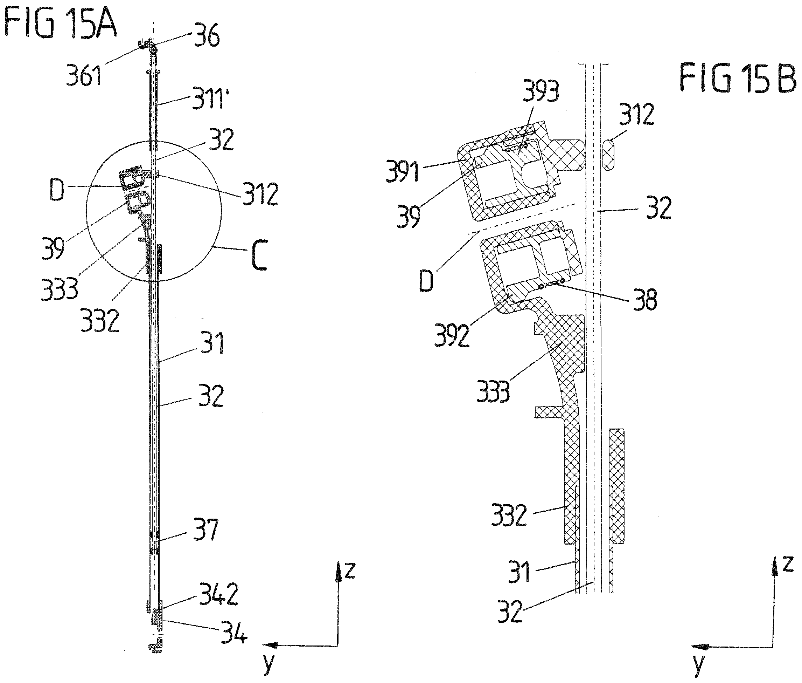

Die Seiltrommel 39 ist drehbar um eine Drehachse D an einem Gehäusebasisteil 333 angeordnet und über das Gehäusebasisteil 333 mit dem Motor 330 verbunden. Die Seiltrommel 39 ist von dem Gehäusebasisteil gehäuseartig eingefasst und in dem Gehäusebasisteil 333 drehbar gelagert. Wie insbesondere aus den Querschnittsansichten gemäß Fig. 15A und Fig. 15B deutlich wird, ist die Seiltrommel 39 mit ihrer Drehachse D schräg zur Erstreckungsrichtung (parallel zur Z-Richtung) des Führungsmittels 31 angeordnet.

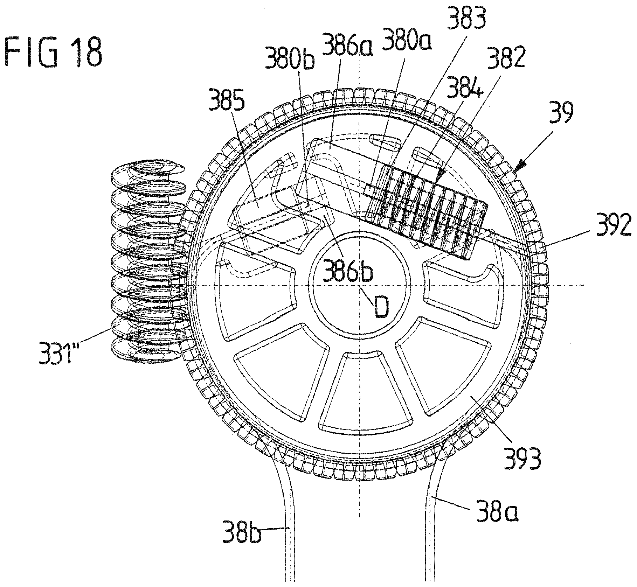

Wie beispielsweise in Fig. 15A und 15B in Zusammenschau mit Fig. 18 dargestellt ist, ist die Seiltrommel 39 ist im Wesentlichen zylindrisch ausgebildet und weist an ihrer Umfangsfläche zum einen die Verzahnung 392 und zum anderen einen Wickelbereich 393 auf, der ausgebildet ist, das Übertragungsmittel 38 winkelnd aufzunehmen. Das Übertragungsmittel 38 erstreckt sich, wie beispielsweise in Fig. 16B dargestellt ist, schräg von der Seiltrommel 39 in das Führungsmittel 31 und wird im Führungsmittel 31 zur Umlenkung 34 am unteren Ende des Führungsmittels 31 und von der Umlenkung 34 zurück zur Seiltrommel 39 geführt.

Die schräge Anordnung der Seiltrommel 39 bewirkt zum einen, dass das Übertragungsmittel 38 in Form des Stahlseils unter einem vorteilhaften Winkel in das Führungsmittel 31 eingeführt wird, und zum anderen, dass die Verzahnung 392 der Seiltrommel 39 zum Eingriff mit der Antriebswelle 331" gerade verzahnt ausgebildet werden kann. Um letzteres zu erreichen, muss der Verkippungswinkel der Seiltrommel 39 relativ zum Führungsmittel 31 dem Neigungswinkel der Schneckenverzahnung auf der Antriebswelle 331" entsprechen, so dass die (geneigte) Schneckenverzahnung der Antriebswelle 331" in die gerade Verzahnung 392 der (geneigten) Seiltrommel 39 eingreifen kann.

In Fig. 18 ist die Ausbildung der Seiltrommel 39 detailliert dargestellt. Aus Fig. 18 ist insbesondere auch ersichtlich, dass die Verzahnung 392 der Seiltrommel 39 gerade ausgebildet ist und mit der geneigten Schneckenverzahnung der Antriebswelle 331" in Eingriff steht.

Die Seiltrommel 39 weist zwei Nippelkammern 386a, 386b auf, in denen jeweils ein Seilnippel 383 bzw. 385 angeordnet ist, der jeweils mit einem Ende 380a, 380b der Seilstücke 38a, 38b des Übertragungsmittels 38 verbunden ist. Über die Seilnippel 383, 385 und die Nippelkammern 386a, 386b sind die Seilenden 380a, 380b mit der Seiltrommel 39 verbunden, wobei die Verbindung derart hergestellt ist, dass ein Aufwickeln des einen Seilstücks 38a bzw. 38b des Übertragungsmittels 38 ein Abwickeln des anderen Seilstücks 38b bzw. 38a derart bewirkt, dass die Länge des Übertragungsmittels 38 in dem Führungsmittel 31 konstant bleibt, sich das Übertragungsmittel 38 jedoch in dem Führungsmittel 31 bewegt und dadurch den mit dem Übertragungsmittel 38 verbundenen Mitnehmer 37 antreibt.

Die Seiltrommel 39 sieht ein Längenausgleichsmittel 382 zum Längenausgleich des Übertragungsmittels 38 vor. Das Längenausgleichsmittel 382 weist eine Feder 384 auf, die zwischen dem Seilnippel 383 und der der Austrittsstelle des Übertragungsmittels 38 zugewandten Seite der Nippelkammer 386a angeordnet ist. Die Feder 384 bewirkt eine Vorspannung des Seilnippels 383 in der Nippelkammer 386a derart, dass bei nachlassender Straffung des Übertragungsmittels 38 der Seilnippel 383 in der Nippelkammer 386a verschoben wird, um das Übertragungsmittel 38 nachzuspannen.

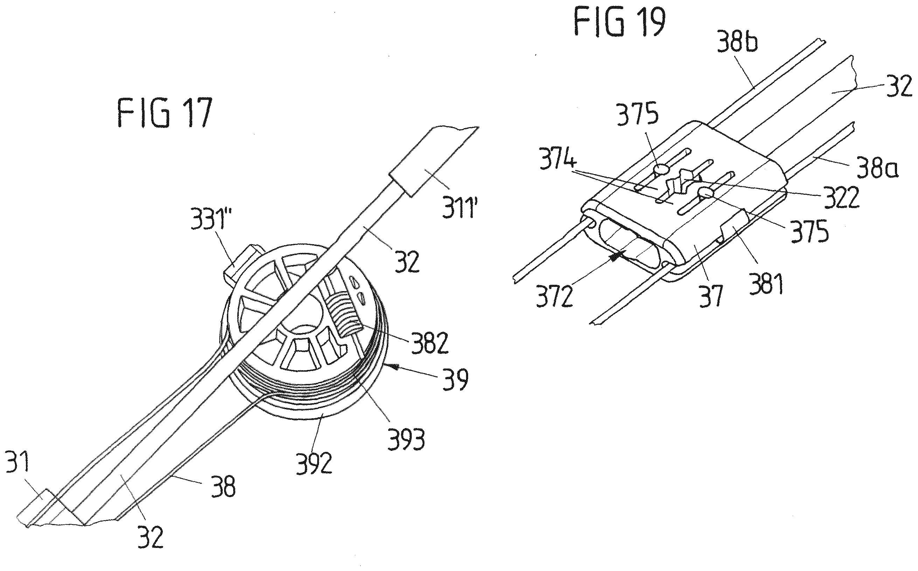

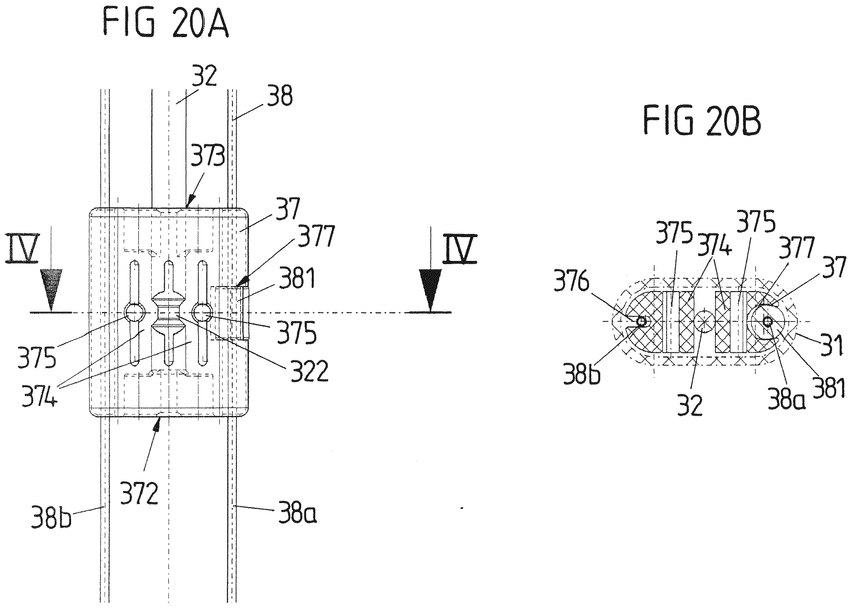

Analog der Ausführungsform der Antriebsvorrichtung gemäß Fig. 2 bis Fig. 13 ist auch bei der Ausführungsform gemäß Fig. 14 bis Fig. 20 das Schubelement 32 über einen Mitnehmer 37 mit dem Übertragungsmittel 38 verbunden. Der Mitnehmer 37, der in seiner funktionellen Ausbildung dem Mitnehmer 37 der Ausführungsform gemäß Fig. 2 bis Fig. 13 entspricht, ist im Detail in Fig. 19 und Fig. 20A und Fig. 20B dargestellt. Der Mitnehmer 37 ist über einen in einer Nippelkammer 377 des Mitnehmers 37 angeordneten Seilnippel 381, der fest mit dem Übertragungsnippel 38 verbunden ist, an das Seilstück 38a des Übertragungsmittel 38 gekoppelt. Eine Bewegung des Übertragungsmittels 38 wird somit direkt in eine Bewegung des Mitnehmers 37 übertragen. Das zweite Seilstück 38b des Übertragungsmittels 38 wird hierbei gleitend in einer Gleitöffnung 376 des Mitnehmers 37 geführt.

Der Mitnehmer 37 ist lösbar mit dem Schubelement 32 verbunden. Zu diesem Zweck weist der Mitnehmer 37 elastische Rippen 374 auf, die bei eingestecktem Schubelement 32 mit einer Einkerbung 322 im Bereich des unteren Endes des Schubelementes 32 in Eingriff stehen und somit das Schubelement 32 im Mitnehmer 37 halten. Die elastischen Rippen 374 sind, wie in Fig. 20A dargestellt, stegartig ausgebildet und sind einstückig mit dem aus Kunststoff ausgebildeten Grundkörper des Mitnehmers 37 verbunden. Zwischen den elastischen Rippen 374 sind in parallel zur Erstreckungsrichtung des Schubelements 32 verlaufenden Schlitzen federelastische Elemente 375 angeordnet, die die elastischen Rippen 374 elastisch gegenüber dem Schubelement 32 vorspannen und beispielsweise in Form von wulstartigen Gummipfropfen ausgebildet sind. Die längliche Ausgestaltung der federelastischen Elemente 375 ist insbesondere aus der Querschnittsdarstellung gemäß Fig. 20B ersichtlich, die den Mitnehmer 37 im Querschnitt entlang der Schnittlinie IV-IV gemäß Fig. 20A zeigt.

Analog der Ausführungsform des Mitnehmers 37 gemäß Fig. 4B ist das Schubelement 32 auch bei dem Mitnehmer 37 gemäß Fig. 19 und 20A, 20B lösbar mit dem Mitnehmer 37 verbunden und kann zum einen durch Ausübung einer Zugkraft in Schließrichtung ZU oder durch Ausübung einer Druckkraft in Öffnungsrichtung AUF auf das Schubelement 32 aus dem Mitnehmer 37 gelöst werden. Dadurch, dass bei einer Druckkraft das Schubelement 32 durch den Mitnehmer 37 hindurch gedrückt werden kann, um somit die Verbindung zwischen dem Schubelement 32 und dem Mitnehmer 37 zu lösen, wird einem Einklemmfall vorgebeugt, indem die elastischen Rippen 374 und die federelastischen Elemente 375 derart ausgelegt sind, dass bei Überschreiten einer bestimmten Druckkraft sich die Verbindung zwischen dem Schubelement und dem Mitnehmer 37 automatisch löst und das Schubelement 32 und der Mitnehmer 37 außer Eingriff gelangen. In seiner Funktionsweise ist der Mitnehmer 37 gemäß Fig. 19 und 20A, 20B analog dem Mitnehmer 37 gemäß Fig. 4B ausgebildet.

Das Gehäusebasisteil 333 des Antriebs 33 ist fest mit dem ersten Abschnitt 310 des Führungsmittels 31 verbunden, wobei der erste Abschnitt 310 zur Verbindung des Führungsmittels 31 mit dem Antrieb 33 in das Gehäusebasisteil 333 eingesteckt wird, wie in Fig. 15B dargestellt ist.

Am Gehäusebasisteil 333 ist eine Führungsbuchse 312 (siehe Fig. 15A und Fig. 15B) angeordnet, die einen Führungspunkt des Schubelements 32 im Bereich des Antriebs 33 definiert. Ein zweiter Abschnitt 311' des Führungsmittels 31 ist am Schubelement 32 angeordnet und, analog der Ausführungsform gemäß Fig. 11 bis Fig. 13, separat zum ersten Abschnitt 310 des Führungsmittels 31 ausgebildet. Der zweite Abschnitt 311' dient zum einen zur Abdichtung und zum Schutz des Schubelements 32 und zum anderen zur führenden Befestigung des Schubelements 32 am Fahrzeug, wie anhand von Fig. 13A und 13B erläutert worden ist.

Die Ausführungsformen der Antriebsvorrichtung 3 gemäß Fig. 1 bis 20 beziehen sich auf eine Antriebsvorrichtung 3 zum Bewegen eines Abdeckelements in Form des Sonnenrollos 2, die als gesonderte Baueinheit an einer Fahrzeugtür 1, beispielsweise an einem Türinnenblech 12 der Fahrzeugtür 1 angeordnet ist. Unterschiedliche Arten der Befestigung der Antriebsvorrichtung 3 an der Fahrzeugtür 1 sind hierbei denkbar.

Zum einen ist denkbar, die Antriebsvorrichtung 3 an einem Türinnenblech 12 oder einer Türmodulträgerplatte anzuordnen, um ein auf einer Wickelwelle 231 aufgewickeltes Sonnenrollo 2 (siehe Fig. 13B) zu betätigen, wobei die Wickelwelle 231 in einem an einer Türinnenverkleidung angeordneten Rollokasten 23 montiert ist.

Zum zweiten ist denkbar, sowohl die Antriebsvorrichtung 3 als auch den Rollokasten an der Türinnenverkleidung anzuordnen.

Zum dritten ist denkbar, sowohl die Antriebsvorrichtung 3 als auch den Rollokasten 23 am Türinnenblech 12 oder an einer Türmodulträgerplatte anzuordnen.

In einer vierten Variante ist auch möglich, die Antriebsvorrichtung 3 an der Türinnenverkleidung 16, den Rollokasten 23 jedoch am Türinnenblech 12 oder an einer Türmodulträgerplatte vorzusehen.

Ein Vorteil der Antriebsvorrichtung 3 gemäß den Ausführungsformen in Fig. 1 bis Fig. 20 ist, dass die Antriebsvorrichtung 3 eine kompakte Baueinheit darstellt, die vor der Montage vollständig vorprüfbar ist. Durch die Integration des Übertragungsmittels 38 und der Schubelements 32 in das Führungsmittel 31 werden die Bauteile der Antriebsvorrichtung 3 in kompakter Weise angeordnet und gleichzeitig gegen Verschmutzung und Feuchtigkeit aufgrund äußerer Einwirkung geschützt.

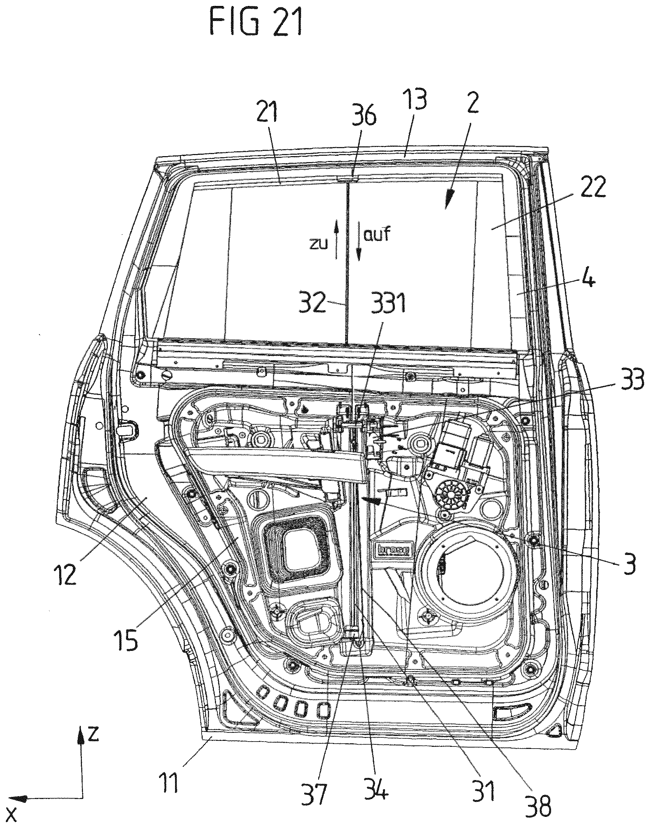

Alternativ zur Ausführung der Antriebsvorrichtung 3 als gesonderte Baueinheit ist auch denkbar, die Antriebsvorrichtung 3 in eine Fahrzeugtür 1, insbesondere eine Türmodulträgerplatte zu integrieren. Eine solche Ausführungsform der Antriebsvorrichtung 3, bei der die Antriebsvorrichtung 3 in eine Türmodulträgerplatte 15 einer Fahrzeugtür 1 integriert ist, ist in Fig. 21 bis 27 dargestellt. Die Integration der Antriebsvorrichtung 3 in die Türmodulträgerplatte 15 wird hierbei insbesondere dadurch erreicht, dass das Führungsmittel 31 der Antriebsvorrichtung 3 in die beispielsweise aus Kunststoff hergestellte Türmodulträgerplatte 15 einstückig eingeformt ist.

Die Türmodulträgerplatte 15 ist Teil eines Türmoduls und trägt unterschiedliche Aggregate der Fahrzeugtür 1, beispielsweise einen Lautsprecher, eine Armstütze, einen Fensterheber oder dergleichen, die in Fig. 21 nicht näher bezeichnet sind.

Wie in Fig. 21 dargestellt, erstreckt sich das Führungsmittel 31 in Z-Richtung vertikal entlang der Türmodulträgerplatte 15. Am oberen Ende des Führungsmittels 31 ist ein Antrieb 33 und am unteren Ende des Führungsmittels 31 eine Umlenkung 34 angeordnet. In dem Führungsmittel 31 wird ein Mitnehmer 37 geführt, der mit einem Übertragungsmittel 38, das sich zumindest Abschnittsweise in dem Führungsmittel 31 erstreckt, gekoppelt und durch Bewegen des Übertragungsmittels 38 in dem Führungsmittel 31 bewegt wird.

Bei der in Fig. 21 bis Fig. 27 dargestellten Ausführungsform wird ein Antrieb 33 mit einer Spindel 331 zum Auf- und Abwickeln des Übertragungsmittels 38 verwendet. Die Antriebsvorrichtung 3 ist in ihrer Funktion hierbei vollständig analog zur Ausführungsform der Antriebsvorrichtung 3 gemäß Fig. 2 bis Fig. 13. Insbesondere ist das Übertragungsmittel 38 mit seinen beiden Enden derart mit der Spindel 331 verbunden, dass nach Art eines einsträngigen Seilfensterhebers ein Aufwickeln über das eine Ende des Übertragungsmittels 38 ein Abwickeln des anderen Endes bewirkt und umgekehrt, so dass eine Drehbewegung der Spindel 331 in eine Längsbewegung des Übertragungsmittels 38 in dem Führungsmittel 31 und somit in eine Längsbewegung des Mitnehmers 37 im Führungsmittel 31 übertragen wird.

Grundsätzlich ist selbstverständlich auch möglich, eine Antriebsvorrichtung 3 mit einem eine Seiltrommel 39 aufweisenden Antrieb 33 analog der Ausführungsform gemäß Fig. 14 bis 20 in die Türmodulträgerplatte 15 zu integrieren.

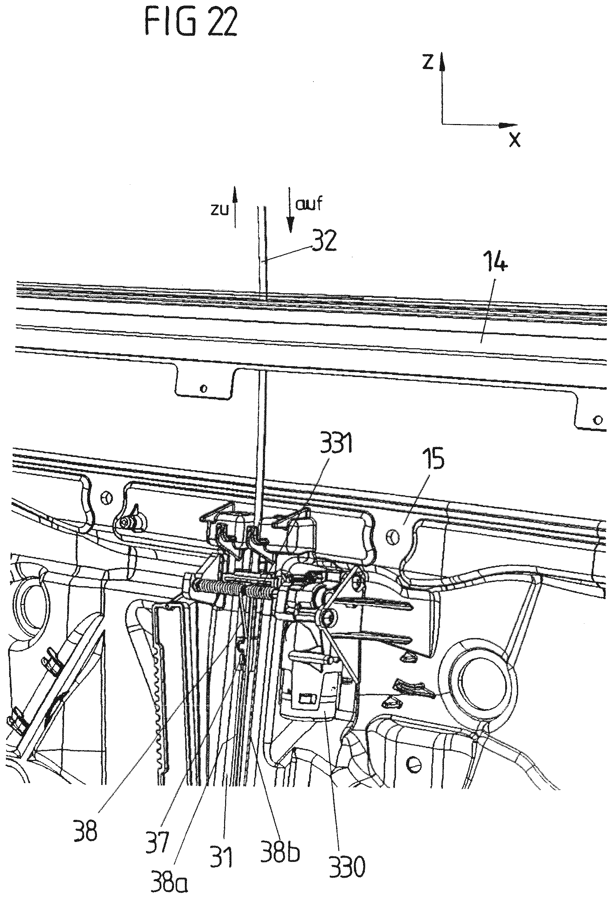

Wie in Fig. 22 und Fig. 25 dargestellt ist, ist die Spindel 331 des Antriebs 33 drehbar in einem einstückig mit der Türmodulträgerplatte 15 verbundenen Gehäusebasisteil 333 gelagert. Die Spindel 331 erstreckt sich zwischen Ansätzen 333a, 333b des Gehäusebasisteils 333, ist über eine Antriebswelle 331' mit dem Motor 330 des Antriebs 33 verbunden und wird über diese angetrieben.

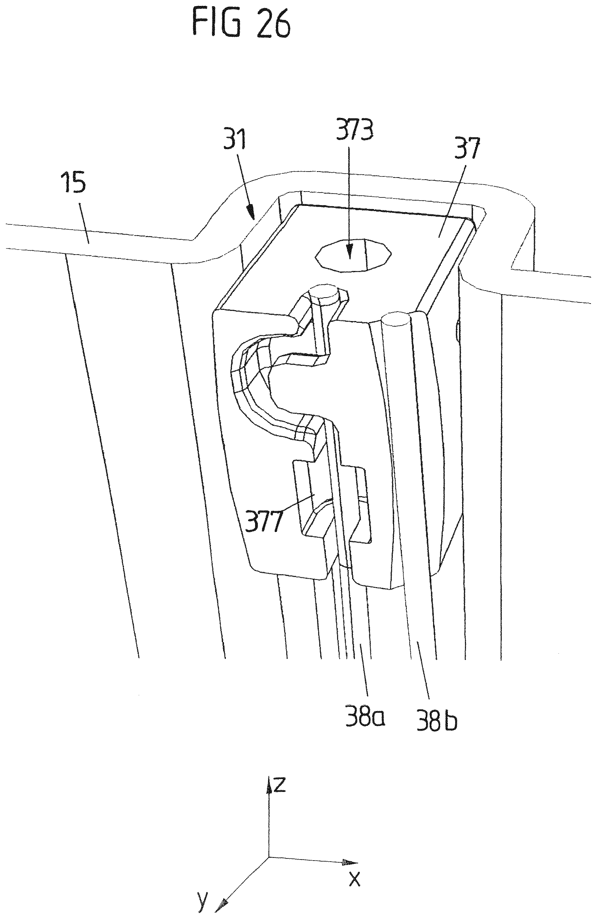

Das Führungsmittel 31 ist in Form eines Führungskanals ausgebildet, der, wie insbesondere in Fig. 26 dargestellt ist, im Querschnitt senkrecht zu seiner Erstreckungsrichtung Z ein U-förmiges Profil aufweist. Der Mitnehmer 37 wird somit in eine erste, der X-Richtung entsprechenden Richtung beidseitig abgestützt, in eine zweite, der Y-Richtung entsprechenden Richtung jedoch nur einseitig abgestützt.

Um eine sichere Führung des Mitnehmers 37 im Führungsmittel 31 zu erreichen, können im Bereich des Führungsmittels 31 seitliche, sich längs des Führungsmittels 31 erstreckende Führungsrippen (in Fig. 26 nicht dargestellt) ausgebildet sein, die zur Führung des Mitnehmers 37 in dem Führungsmittel 31 in eine Nut am Mitnehmer 37 eingreifen und eine Führung des Mitnehmers 37 entlang des Führungsmittels 31 bewirken.

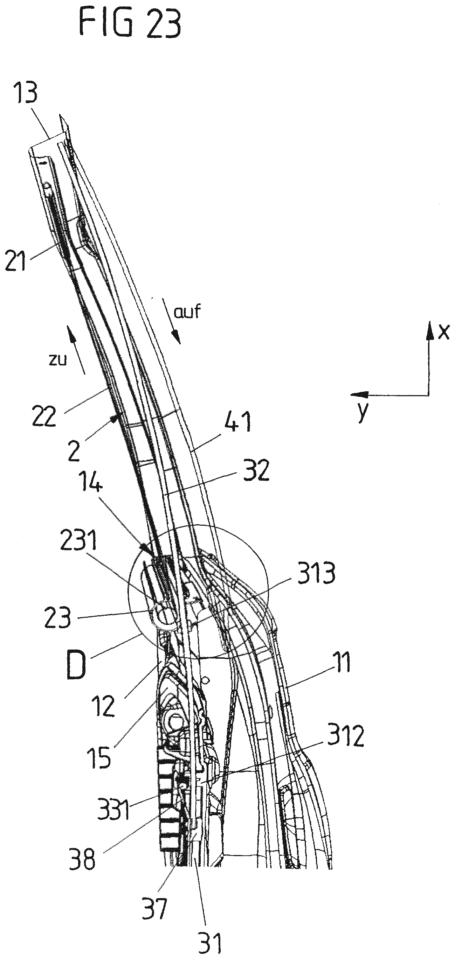

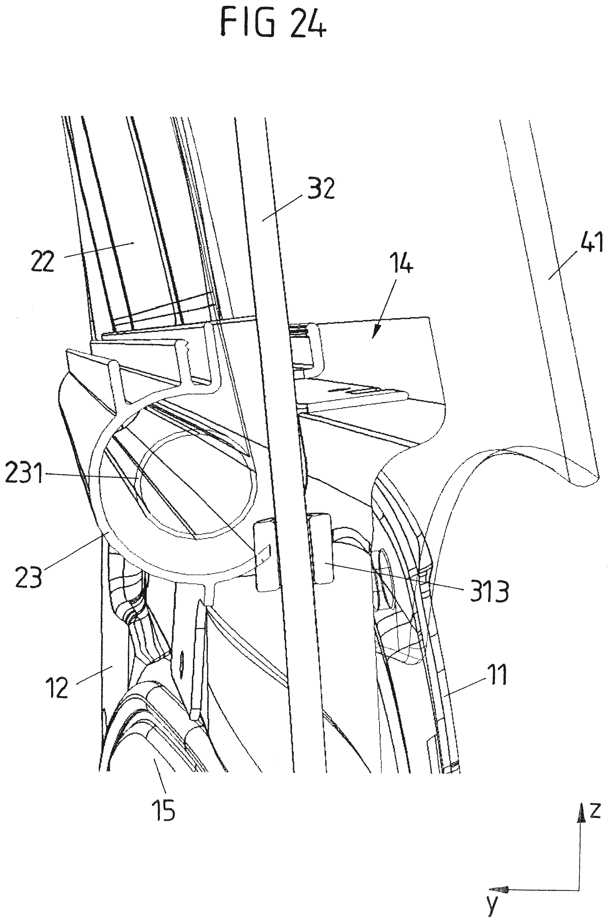

Alternativ oder zusätzlich wird der Mitnehmer 37 wird in dem Führungskanal 31 vorteilhafterweise in Y-Richtung dadurch gehalten, dass das mit dem Mitnehmer 37 verbundene Schubelement 32, das beispielsweise als elastisches Stangenelement ausgebildet ist, relativ zum Führungskanal 31 vorgespannt ist. Wie dieses im Einzelnen erreicht wird, ist aus Fig. 23 und Fig. 24 ersichtlich und soll nachstehend erläutert werden.

Das Schubelement 32, das an seinem unteren Ende mit dem Mitnehmer 37 verbunden und in dem Führungsmittel 31 in Form des Führungskanals geführt ist, wird zusätzlich durch eine Führungsbuchse 312 im Bereich des Antriebs 33 (siehe Fig. 23) und eine Führungsbuche 313 im Bereich der Türbrüstung 14 (siehe Fig. 23 und Fig. 24) geführt. Die Führungsbuchsen 312, 313 sind außerhalb der gedachten Verlängerung des Führungsmittels 31 in Z-Richtung angeordnet und bewirken dadurch, dass der Mitnehmer 37 in das als Führungskanal ausgebildete Führungsmittel 31 hineingedrückt wird und somit nicht aus dem einseitig offenen Führungskanal gleiten kann.

Eine zusätzliche Verspannung des Schubelements 32 wird dadurch erreicht, dass das obere Ende des Schubelements 32, an dem das Verbindungselement 36 zur Verbindung des Schubelements 32 mit dem Abdeckelement in Form des Sonnenrollos 2 angeordnet ist, bei einer Schließbewegung entlang der die Fensteröffnung 4 verschließenden Fensterscheibe 41 gleitet. Da die Fensterscheibe 41 in der Regel in Querrichtung, entsprechend der Y-Richtung, leicht gekrümmt ausgebildet ist, bewirkt das Verfahren des Schubelements 32 in Schließrichtung ZU eine Krümmung des Zugelements 32 in Querrichtung Y und somit eine zunehmende Verspannung des Schubelements 32 gegenüber dem Führungsmittel 31. Auf diese Weise wird zusätzlich sichergestellt und gewährleistet, dass der Mitnehmer 37 zuverlässig in dem einseitig offenen, das Führungsmittel 31 ausbildenden Führungskanal geführt wird.

Durch die Vorspannung des Schubelements 32 gegenüber dem Führungsmittel 31 kann noch ein weiterer vorteilhafter Effekt erzielt werden. Insbesondere ist vorteilhaft, die Vorspannung mittels der Führungsbuchsen 312, 313 in einem unteren Hubbereich, in dem das Schubelement 32 im Wesentlichen in das Führungsmittel 31 eingefahren ist, groß auszulegen, in einem oberen Hubbereich jedoch, in dem das Schubelement 32 im Wesentlichen aus dem Führungselement 31 ausgefahren ist, gering auszubilden. Hierdurch werden Schwer- und Leichtgängigkeiten über den Hubbereich der Antriebsvorrichtung 3 ausgeglichen, so dass die durch den Antrieb 33 auf das Schubelement 32 übertragene Hubkraft über den gesamten Hubbereich des Schubelements 32 annähernd gleich ist. Insbesondere wird die Antriebsvorrichtung 3 auf diese Weise in einem unteren Hubbereich, in dem der Verschiebevorgang in der Regel leichtgängig ist, durch eine Vorspannung beaufschlagt und somit die Hubkraft gedrosselt. Gleichzeitig wird in einem oberen Hubbereich, in dem die Antriebsvorrichtung 3 in der Regel schwergängiger ist, nur eine geringe Verspannung beaufschlagt, so dass die Hubkraft in diesem Hubbereich nur geringfügig oder gar nicht gedrosselt wird. Auf diese Weise wird erreicht, dass ein die Antriebsvorrichtung 3 betätigender Fahrzeuginsasse den Hubvorgang als angenehm empfindet und Schwergängigkeiten der Antriebsvorrichtung 3 im oberen Hubbereich für den Fahrzeuginsassen nicht wahrnehmbar sind.

Ein Vorsehen einer derartigen, hubbereichabhängigen Vorspannung ist insbesondere bei einem nicht drehzahlgeregelten Motor 330 des Antriebs 33 vorteilhaft, um eine konstante Verstellgeschwindigkeit einzustellen.

In Fig. 25 ist dargestellt, dass, wenn sich der Mitnehmer 37 in einer oberen Stellung in unmittelbarer Nähe zur Spindel 331 des Antrieb 33 befindet, sich das von der Spindel 331 hin zum Mitnehmer 37 erstreckende Seilstück 38a des Übertragungsmittels 38 derart zwischen dem Mitnehmer 37 und der Spindel 331 verläuft, dass der Ansatzpunkt 387 des Seilstücks 38a an der Spindel 331 unmittelbar oberhalb des Führungsmittels 31 angeordnet ist. Auf diese Weise wird, wie vorangehend bereits anhand von Fig. 5A und Fig. 10 erläutert worden ist, bewirkt, dass in der oberen Stellung des Mitnehmers 37 im Wesentlich in die Erstreckungsrichtung des Führungsmittels 31 gerichtete Längskräfte auf den Mitnehmer 37 ausgeübt werden, eine Einleitung von Querkräften jedoch vermieden wird.

Bei der in Fig. 26 detailliert dargestellten Ausführungsform des Mitnehmers 37 ist das Übertragungsmittel 38 im Bereich seines Seilstücks 38a über einen mit dem Seilstück 38a verbundenen Seilnippel (in Fig. 26 nicht dargestellt), der in der Nippelkammer 377 des Mitnehmers 37 angeordnet ist, gekoppelt. Das Seilstück 38b, das sich von der Umlenkung 34 zurück zum Antrieb 33 erstreckt, wird am Mitnehmer 37 gleitend vorbei geführt. Das Schubelement 32 wird durch eine Öffnung 373 im oberen Bereich des Mitnehmers 37 in den Mitnehmer 37 eingeführt und mit dem Mitnehmer 37 lösbar verbunden.

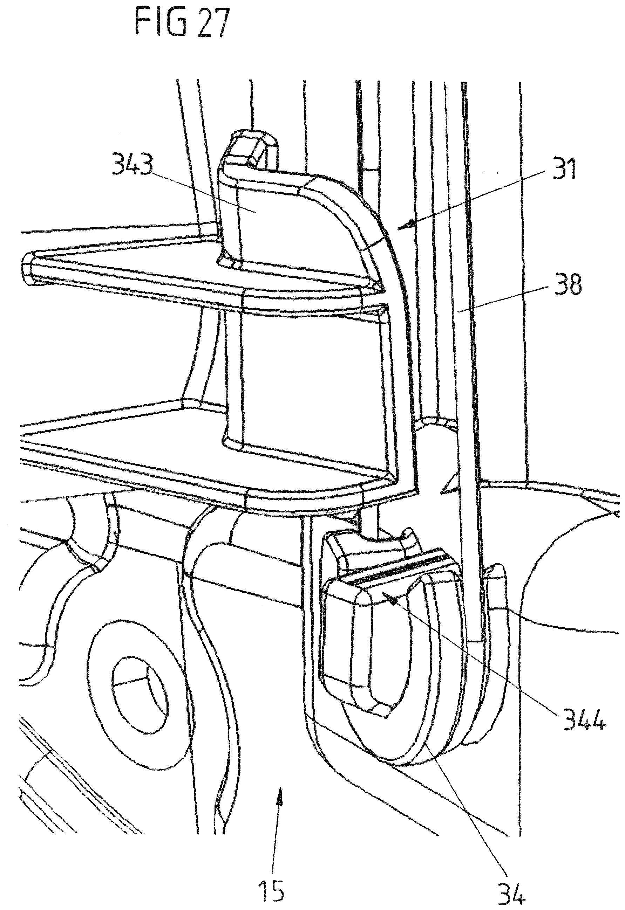

Der Bereich der unteren Umlenkung 34 der Antriebsvorrichtung 3 ist in Fig. 27 im Detail dargestellt. Die Umlenkung 34 ist einstückig an die Türmodulträgerplatte 15 angeformt und dient zum Umlenken des Übertragungsmittels 38 um 180°. Der Verschiebeweg des Mitnehmers 37 in dem Führungsmittel 31 ist im Bereich der Umlenkung 34 am unteren Ende des Führungsmittels 31 durch einen Anschlag 344 begrenzt. In dieser unteren Ausgangsstellung des Mitnehmers 37 liegt der Mitnehmer 37 am Anschlag 344 an und wird gleichzeitig durch ein Arretierungsmittel in Form eines Einlaufelements 343 im Führungsmittel 31 insbesondere quer zum Führungsmittel 31 festgesetzt. Das Einlaufelement 343 weist an seiner oberen Kante eine Einlaufschräge auf und ist ausgebildet, den von oben entlang des Führungsmittels 31 in Richtung der Umlenkung 34 gleitenden Mitnehmer 37 aufzunehmen und den Mitnehmer 37 in seiner unteren Stellung im Bereich der Umlenkung 34 im Führungsmittel 31 festzusetzen.

Alternativ zu dem Einlaufelement 343 gemäß Fig. 27 kann auch ein Bolzen 342 gemäß Fig. 9B verwendet werden.

Das Verfahren des Abdeckelements in Form des Sonnenrollos 2 ist bevorzugt derart gesteuert, dass ein Ausfahren des Sonnenrollos 2 in seine geschlossene, abdeckende Position nur möglich ist, wenn die Fensterscheibe 41 der Fahrzeugtür 1 geschlossen ist und die Fensteröffnung 4 der Fahrzeugtür 1 somit bedeckt. Ein Verfahren des Sonnenrollos 2 bei geöffneter Fensterscheibe 41 ist dann nicht möglich. Eine Steuerungsvorrichtung, die gleichzeitig mit einem Fensterheber zur Betätigung der Fensterscheibe 41 und der Antriebsvorrichtung 3 zum Betätigen des Sonnenrollos 2 zusammenwirkt, ist zu diesem Zweck bevorzugt derart ausgelegt, dass, wenn ein Öffnungsvorgang der Fensterscheibe 41 initiiert wird, zunächst das Sonnenrollo 2 eingefahren und somit geöffnet wird, um erst anschließend die Fensterscheibe 41 zu öffnen. Umgekehrt wird, wenn bei geöffneter Fensterscheibe 41 ein Schließbefehl für das Sonnenrollo 2 erfolgt, zunächst die Fensterscheibe 41 geschlossen, um erst anschließend das Sonnenrollo 2 auszufahren.

Das Sonnenrollo 2 wird vorzugsweise im Automatiklauf betrieben, indem das Sonnenrollo 2 bei Erfolgen eines Schließbefehls automatisch von der vollständig geöffneten Position in die vollständig geschlossene, abdeckende Position verfahren wird. Umgekehrt wird bei Erfolgen eines Öffnungsbefehls das Sonnenrollo 2 automatisch vollständig eingefahren.

Bevorzugt wird das mit dem Sonnenrollo 2 gekoppelte Schubelement 32 derart verfahren, dass es bei einem Schließvorgang in Anlage mit der geschlossenen Fensterscheibe 41 gelangt und entlang der geschlossenen Fensterscheibe 41 in die geschlossene Position verfährt. Vorteilhafterweise ist die Antriebsvorrichtung 3 hierbei derart konzipiert, dass das Schubelement 32 über ein Anlageelement, das im Bereich des Verbindungselements 36 ausgebildet ist, beim Schließvorgang möglichst schnell in Anlage mit der Fensterscheibe 41 gelangt und somit auf seinem Verschiebeweg durch die Fensterscheibe 41 gleitend geführt wird.

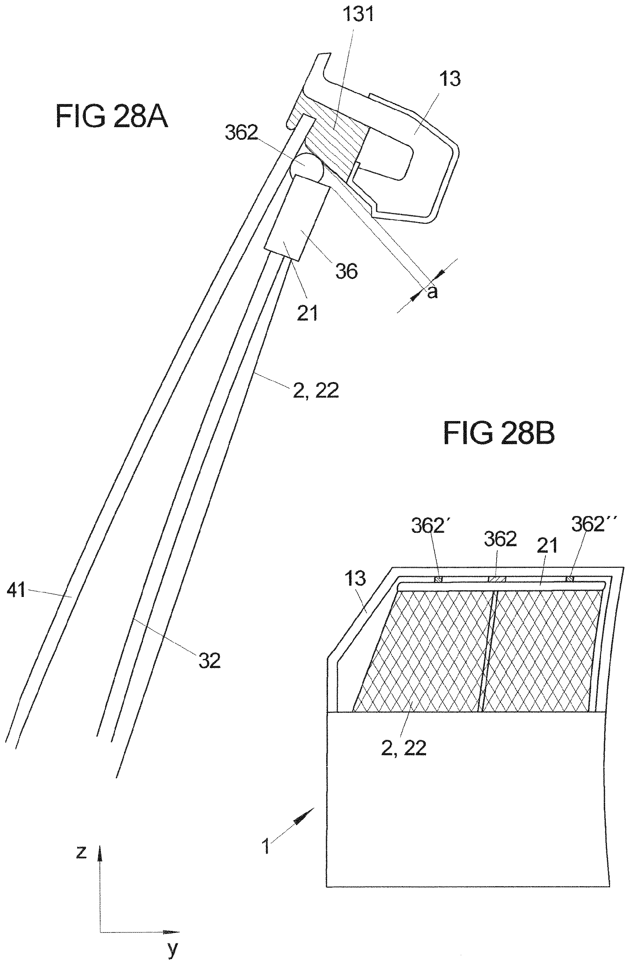

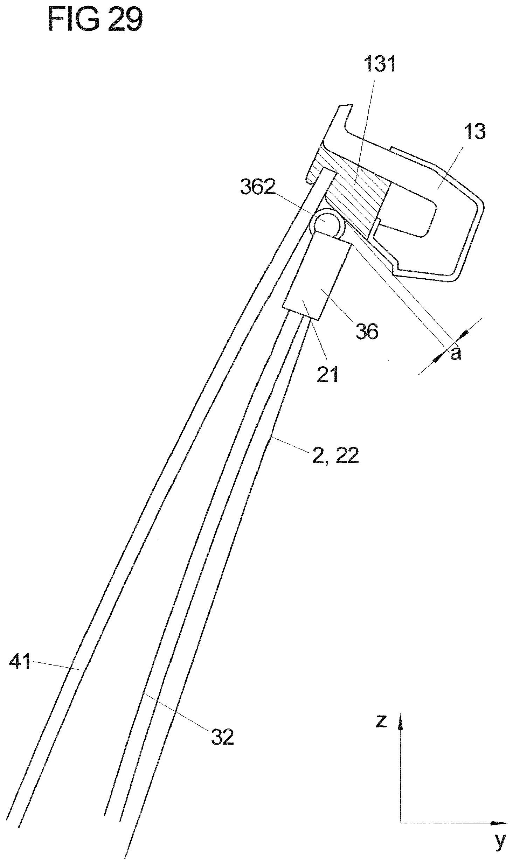

Ausführungsformen eines solchen Anlageelements 362 sind in Fig. 28A und 28B sowie in Fig. 29 dargestellt. Das Anlageelement 362 ist an dem Verbindungselement 36 am oberen Ende des Schubelementes 32 ausgebildet und stellt ein Distanzelement dar, das bewirkt, dass das Verbindungselement 36 während des Verschiebeweges des Schubelements 32 nicht in Anlage an die Fensterscheibe 41 gelangen kann und in der geschlossenen Position mit einem Abstand a von einem oberen Querrahmenelement des Fensterrahmens 13, insbesondere einer Dichtung 131 beabstandet ist. Das Anlageelement 362 kann in seinem Material derart angepasst sein, dass es leichtläufig entlang der Fensterscheibe 41 gleitet.

Wie in der Explosionsdarstellung der Fig. 10 dargestellt ist, ist das Anlageelement 362 vorteilhafterweise um eine Achse 363 drehbar an dem Verbindungselement 36 angeordnet und kann somit reibungsfrei entlang der Fensterscheibe 41 bewegt werden.

Wie in Fig. 28B dargestellt ist, sind zusätzliche Anlageelemente 362', 362" an der oberen Querstange 21 des Sonnenrollos 2 ausgebildet, die eine sichere, definierte Führung der Querstange 21 entlang der Fensterscheibe 41 sicherstellen.

Bei der Ausführungsform gemäß Fig. 28A ist das Anlageelement 362 massiv beispielsweise aus Kunststoff hergestellt. In Fig. 29 ist eine alternative Ausgestaltung des Anlageelements 362 dargestellt, bei der das Anlageelement 362 elastisch ausgebildet ist und sich zum Ausgleich und zur Anpassung der Gleitbewegung verformen und während der Verschiebebewegung formschlüssig an die Fensterscheibe 41 anlegen kann.

Der der Erfindung zugrunde liegende Gedanke ist nicht auf die vorangehend beschriebenen Ausführungsbeispiele beschränkt. Insbesondere ist die Verwendung der Antriebsvorrichtung 3 nicht auf das Betätigen eines Sonnenrollos 2 einer Fahrzeugtür 1 beschränkt. Vielmehr kann eine gleich geartete Antriebsvorrichtung auch Verwendung zum Bewegen einer Schiebedachabdeckung oder einer Kofferraumabdeckung finden.

### Bezugszeichenliste

- 1: Fahrzeugtür
- 11: Türaußenblech
- 12: Türinnenblech
- 13: Fensterrahmen
- 131: Dichtung
- 14: Türbrüstung
- 141: Führungsöffnung
- 15: Türmodulträgerplatte
- 16: Türinnenverkleidung
- 2: Rollo
- 21: Querstange
- 22: Behang
- 23: Rollokasten
- 231: Wickelwelle
- 3: Antriebsvorrichtung
- 31: Führungsmittel
- 310: Unterer Teil der Führung
- 311, 311': Oberer Teil der Führung
- 311a, 311b, 311c: Einschnürung
- 312, 313: Führungsbuchse
- 32: Schubelement
- 321: Clipselement
- 322: Einkerbung
- 33: Antrieb
- 330: Motor
- 331: Spindel
- 331': Antriebswelle
- 331": Antriebsritzel
- 332: Hülse
- 333: Gehäusebasisteil
- 333a, 333b: Ansatz
- 334, 334': Freischnitt
- 335: Elektrischer Anschluss
- 336, 337: Befestigungsstelle
- 34: Umlenkung
- 341: Ansatz
- 342: Bolzen
- 343: Einlaufelement
- 344: Anschlag
- 35: Befestigungsstelle
- 36: Verbindungselement
- 361: Haken
- 362, 362', 362": Anlageelement
- 363: Drehachse
- 364: Buchse
- 37: Mitnehmer
- 371: Federelastisches Element
- 372, 373: Öffnung
- 374: Elastische Rippe
- 375: Federelastisches Element
- 376: Gleitöffnung
- 377: Nippelkammer
- 38: Seil
- 38a, 38b: Erstes bzw. zweites Seilstück
- 380a, 380b: Erstes bzw. zweites Seilende
- 381: Seilnippel
- 382: Längenausgleichsmittel
- 383, 385: Seilnippel
- 384: Feder
- 386a, 386b: Nippelkammer
- 387: Ansatzpunkt
- 39: Seiltrommel
- 391: Seiltrommelgehäuse
- 392: Verzahnungsbereich
- 393: Wickelbereich
- 4: Fensteröffnung
- 41: Fensterscheibe
- a: Abstand
- A, B, C: Ausschnitt
- AUF: Öffnungsrichtung
- D: Drehachse
- M: Montagerichtung
- NR: Nassraum
- TR: Trockenraum
- X: Längsrichtung
- Y: Querrichtung
- Z: Vertikalrichtung
- ZU: Schließrichtung

## Patentansprüche

1. Verfahren zur Montage einer Antriebsvorrichtung (3) an einem Kraftfahrzeug, wobei die Antriebsvorrichtung (3) zum Bewegen eines Abdeckelements (2) zum Abdecken einer Öffnung in einem Kraftfahrzeug
- einen Antrieb (33),
- ein Führungsmittel (31) und
- ein mit dem Antrieb (33) gekoppeltes Schubelement (32), das in dem Führungsmittel (31) geführt und zum Bewegen des Abdeckelementes (2) mit dem Abdeckelement (2) verbindbar ist,
aufweist, **gekennzeichnet dadurch, dass**
der Antrieb (33) zum Antreiben des Schubelements (32) über ein als flexibles, ausschließlich auf Zug belastetes, Seil ausgebildetes Übertragungsmittel (38) mit dem Schubelement (32) gekoppelt ist und das Übertragungsmittel (38) sich zumindest abschnittsweise in dem Führungsmittel (31) erstreckt, wobei bei dem Verfahren
- das Führungsmittel (31) der Antriebsvorrichtung (3) an dem Kraftfahrzeug angeordnet wird,
- das Schubelement (32) in eine Montagerichtung (M) in das Führungsmittel (31) eingeschoben wird und
- das Schubelement (32) über eine Verbindungsvorrichtung (321, 371; 322, 374, 375) mit dem Übertragungsmittel (38) der Antriebsvorrichtung verbunden wird.

2. Verfahren nach Anspruch 1, **dadurch gekennzeichnet, dass** das Schubelement (32) in einen unteren Teil (310) des Führungsmittels (31) eingeschoben und über einen Mitnehmer (37) lösbar mit dem Übertragungsmittel (38) verbunden wird.

3. Verfahren nach Anspruch 1 oder 2, **dadurch gekennzeichnet, dass** das Schubelement (32) zur Montage der Antriebsvorrichtung (3) an einer Fahrzeugtür (1) durch eine Türbrüstung (14) der Fahrzeugtür (1) in den unteren, an der Fahrzeugtür (1) angeordneten Teil (310) des Führungsmittels (31) eingeschoben wird, wobei ein oberer Teil (311') des Führungsmittels (31) zur Abdichtung des Schubelements (32) gegenüber einem Nassraum (NR) der Fahrzeugtür (1) in eine Führungsöffnung (141) der Türbrüstung (14) eingesteckt wird.

4. Verfahren zur Montage eines Verstellsystems zum Abdecken einer Öffnung in einem Kraftfahrzeug, insbesondere eines Sonnenrollos, einer Kofferraumabdeckung oder einer Schiebedachabdeckung, wobei das Verstellsystem umfasst:
- ein flächenhaftes Abdeckelement zum Abdecken der Öffnung in dem Kraftfahrzeug,
- eine Antriebsvorrichtung (3) mit einem Antrieb, (33) einem Führungsmittel (31) und
- einem mit dem Antrieb zu koppelnden, länglich erstreckten Schubelement, das zum Bewegen des Abdeckelementes in montiertem Zustand an einem ersten Ende mit dem Mitnehmer und an einem zweiten Ende mit dem Abdeckelement verbunden ist,
**dadurch gekennzeichnet, dass** das Verstellsystem ein in dem Führungsmittel geführten, von dem Antrieb angetriebenen über ein als flexibles, ausschließlich auf Zug belastetes, Seil ausgebildetes Übertragungsmittel mit dem Antrieb gekoppelten Mitnehmer umfasst, und dass
zur Montage zunächst das Abdeckelement (2) und die Antriebsvorrichtung (3) am Kraftfahrzeug oder einem Fahrzeugteil (1) angeordnet werden und anschließend das Schubelement (32) in das Führungsmittel (31) eingeführt und mit seinem ersten Ende (321) mit dem Mitnehmer (37) und mit seinem zweiten Ende (361) mit dem Abdeckelement (3) verbunden wird.

5. Verfahren nach Anspruch 4, **dadurch gekennzeichnet, dass** das Abdeckelement (2) an einer Wickelwelle (231) angeordnet ist und zum Ausfahren von der Wickelwelle (231) abwickelbar ist, wobei das Abdeckelement (2) zusammen mit der Wickelwelle (231) am Kraftfahrzeug oder dem Fahrzeugteil (1) angeordnet wird.

6. Verfahren nach Anspruch 5, **dadurch gekennzeichnet, dass** das Schubelement (32) mit einem von der Wickelwelle (231) abliegenden Rand des Abdeckelements (2) verbunden wird.

7. Verfahren nach einem der Ansprüche 5 bis 6, **dadurch gekennzeichnet, dass** die Verbindung des Schubelementes (32) mit dem Mitnehmer (37) lösbar ausgebildet ist.

8. Verfahren nach Anspruch 7, **dadurch gekennzeichnet, dass** die Verbindung des Schubelementes (32) mit dem Mitnehmer (37) als Clipsverbindung (321, 371) ausgebildet ist.

9. Verfahren nach Anspruch 8, **dadurch gekennzeichnet, dass** das Einclipsen zum Herstellen der Verbindung zwischen dem Schubelement (32) und dem Mitnehmer (37) einen geringeren Kraftaufwand erfordert als das Ausclipsen zum Lösen der Verbindung.

10. Verfahren nach Anspruch 7, **dadurch gekennzeichnet, dass** die Verbindung des Schubelementes (32) mit dem Mitnehmer (37) als Schraubverbindung ausgebildet ist.

11. Verfahren nach Anspruch 10, **dadurch gekennzeichnet, dass** das Schubelement (32) an seinem ersten Ende ein Gewinde aufweist, das in eine Gewindeaufnahme am Mitnehmer (37) zur Herstellung der Verbindung eingeschraubt wird.

12. Verfahren nach Anspruch 7, **dadurch gekennzeichnet, dass** die Verbindung des Schubelementes (32) mit dem Mitnehmer (37) als Bajonett-Verbindung ausgebildet ist, die durch Drehen des Schubelements (32) betätigbar ist.

13. Verfahren nach einem der Ansprüche 4 bis 12, **dadurch gekennzeichnet, dass** ein zusätzliches Führungselement (311') vor der Montage auf das Schubelement (32) aufgesteckt wird und nach dem Einführen des Schubelementes (32) in das Führungsmittel (31) der Antriebsvorrichtung (3) mit dem Kraftfahrzeug oder dem Fahrzeugteil (1) verbunden wird.

14. Verfahren nach einem der Ansprüche 4 bis 13, **dadurch gekennzeichnet, dass** ein zusätzliches Führungselement (311') an dem Kraftfahrzeug oder dem Fahrzeugteil (1) angeordnet und anschließend das Schubelement (32) in das Führungsmittel (31) der Antriebsvorrichtung (3) und das zusätzliche Führungselement (311') eingeführt wird.

15. Verfahren nach einem der Ansprüche 4 bis 14, **dadurch gekennzeichnet, dass** nach dem Einführen des Schubelementes (32) in das Führungsmittel (31) der Antriebsvorrichtung (3) ein zusätzliches Führungselement (311') auf das Schubelement (32) gesteckt wird und anschließend an dem Schubelement (32) ein Verbindungselement (36) zur Verbindung des Schubelementes (32) mit dem Abdeckelement (2) angeordnet wird.

16. Verfahren nach einem der Ansprüche 4 bis 15, **dadurch gekennzeichnet, dass** das länglich erstreckte Schubelement (32) an seinem ersten und zweiten Ende gleich ausgebildet ist, so dass das Schubelement (32) sowohl mit dem ersten als auch mit dem zweiten Ende in das Führungsmittel (31) einführbar ist.

## Claims

1. A method for assembly of a drive device (3) at a motor vehicle, the drive device (3) for moving a covering element (2) for covering an opening in a motor vehicle comprising
- a drive (33),
- a guiding means (31) and
- a pushing element (32) coupled with the drive (33), which is guided in the guiding means (31) and connectable with the covering element (2) for moving the covering element (2),
**characterized in that**
the drive (33) for driving the pushing element (32) is coupled with the pushing element (32) via a transmission means (38) which is provided as a flexible rope (38) which is submitted to tensile forces only, and which at least partly extends in the guiding means (31), wherein, in the method,
- the guiding means (31) of the drive device (3) is arranged on the motor vehicle,
- the pushing element (32) is introduced into the guiding means (31) in a mounting direction (M) and
- the pushing element (32) is connected to the transmission means (38) of the drive device via a connection device (321, 371; 322, 374, 375).

2. The method according to claim 1, **characterized in that** the pushing element (32) is introduced into a lower part (310) of the guiding means (31) and is detachably connected with the transmission means via a catch (37).

3. The method according to claim 1 or 2, **characterized in that** for assembly of the drive device (3) on a vehicle door (1) the pushing element (32) is introduced through a door sill (14) of the vehicle door (1) into the lower part (310) of the guiding means (31) arranged at vehicle door (1), wherein an upper part (311') of the guiding means (31) is inserted into a guiding opening (141) of the door sill (14) in order to seal the pushing element (32) against a wet chamber (NR) of the vehicle door (1).

4. A method for assembly of an adjusting system for covering an opening in a motor vehicle, in particular a sunblind, a trunk lid or a sliding-roof cover, the adjusting system comprising:
- a flat covering element for covering the opening in the motor vehicle,
- a drive device (3) comprising a drive (33), a guiding means (31), and
- an elongated pushing element to be coupled with the drive, which for moving the covering element in the mounted condition is connected with the catch at a first end and with the covering element at a second end,
**characterized in that**
the adjusting system comprises a catch, which is guided in the guiding means, driven by the drive device via a transmission means that is provided as a flexible rope which is submitted to tensile forces only and coupled with the drive device, and **in that**
for assembly, the covering element (2) and the drive device (3) first are arranged at the motor vehicle or a vehicle part (1) and, subsequently, the pushing element (32) is introduced into the guiding means (31) and is connected with the catch (37) with its first end (321) and connected with the covering element (3) with its second end (361).

5. The method according to claim 4, **characterized in that** the covering element (2) is arranged at a winding shaft (231) and can be unwinded from the winding shaft (231) for extension, wherein the covering element (2) is arranged together with the winding shaft (231) at the motor vehicle or at the vehicle part (1).

6. The method according to claim 5, **characterized in that** the pushing element (32) is connected with an edge of the covering element (2) distant from the winding shaft (231).

7. The method according to one of the claims 5 to 6, **characterized in that** the connection of the pushing element (32) with the catch (37) is detachable.

8. The method according to claim 7, **characterized in that** the connection of the pushing element (32) with the catch (37) is a clip-on connection (321, 371).

9. The method according to claim 8, **characterized in that** for clipping-on in order to provide connection between the pushing element (32) and the catch (37) less effort is needed than for unclipping in order to release the connection.

10. The method according to claim 7, **characterized in that** the connection of the pushing element (32) with the catch (37) is a screw connection.

11. The method according to claim 10, **characterized in that** the pushing element (32) has a thread at its first end, which is screwed into the tread receiver at the catch (37) in order to provide the connection.

12. The method according to claim 7, **characterized in that** the connection of the pushing element (32) with the catch (37) is a bayonet joint which is operable by turning the pushing element (32).

13. The method according to one of the claims 4 to 12, **characterized in that** an additional guiding element (311') is fitted on the pushing element (32) before assembly and it is connected to the motor vehicle or the vehicle part (1) after the pushing element (32) has been introduced into the guiding element (31) of the drive device (3).

14. The method according to one of the claims 4 to 13, **characterized in that** an additional guiding element (311') is arranged at the vehicle or the vehicle part (1) and, subsequently, the pushing element (32) is introduced into the guiding element (31) of the drive device (3) and the additional guiding element (311').

15. The method according to one of the claims 4 to 14, **characterized in that**, after the pushing element (32) has been introduced into the guiding element (31) of the drive device (3), an additional guiding element (311') is fitted on the pushing element (32) and, subsequently, a connection element (36) is arranged at the pushing element (32) in order to connect the pushing element (32) with the covering element (2).

16. The method according to one of the claims 4 to 15, **characterized in that** the elongated pushing element (32) is formed identically at its first and second end, so that the pushing element (32) can be inserted into the guiding element (31) with the first end or the second end as well.

## Revendications

1. Procédé pour le montage d'un dispositif d'entraînement (3) sur un véhicule automobile, le dispositif d'entraînement (3) pour déplacer un élément de recouvrement (2) pour recouvrir une ouverture dans un véhicule automobile comprenant
- un entraînement (33),
- un moyen de guidage (31) et
- un élément poussoir (32) accouplé avec l'entraînement (33), qui est guidé dans le moyen de guidage (31) et qui peut être relié à l'élément de recouvrement (2) pour déplacer l'élément de recouvrement (2),
**caractérisé en ce que** l'entraînement (33) pour entraîner l'élément poussoir (32) est accouplé à l'élément poussoir (32) via un organe de transmission (38) réalisé sous forme de câble flexible sollicité uniquement en traction et que l'organe de transmission (38) s'étend au moins par tronçons dans le moyen de guidage (31), étant entendu que dans ce procédé
- le moyen de guidage (31) du dispositif d'entraînement (3) est agencé sur le véhicule automobile,
- l'élément poussoir (32) est inséré dans le moyen de guidage (31) dans une direction de montage (M) et
- l'élément poussoir (32) est relié à l'organe de transmission (38) du dispositif d'entraînement via un dispositif de liaison (321, 371 ; 322, 374, 375).

2. Procédé selon la revendication 1, **caractérisé en ce que** l'élément poussoir (32) est inséré dans une partie inférieure (310) du moyen de guidage (31) et relié de manière détachable à l'organe de transmission (38) par un élément d'entraînement (37).

3. Procédé selon la revendication 1 ou 2, **caractérisé en ce que** l'élément poussoir (32) pour le montage du dispositif d'entraînement (3) sur une porte de véhicule (1) est inséré par un rebord de porte (14) de la porte de véhicule (1) dans la partie inférieure (310) du moyen de guidage (31) disposée sur la porte de véhicule (1), une partie supérieure (311') du moyen de guidage (31) pour étanchéifier l'élément poussoir (32) par rapport à un espace humide (NR) de la porte de véhicule (1) étant insérée dans une ouverture de guidage (141) du rebord de porte (14).

4. Procédé pour le montage d'un système de déplacement pour recouvrir une ouverture dans un véhicule automobile, en particulier un pare-soleil déroulant, un cache-bagages ou un recouvrement pour toit ouvrant coulissant, ledit système de déplacement comprenant
- un élément de recouvrement surfacique pour recouvrir l'ouverture (4) dans le véhicule automobile,
- un dispositif d'entraînement (3) avec un entraînement (33), un moyen de guidage (31) et
- un élément poussoir destiné à être accouplé avec l'entraînement et s'étendant en longueur, qui, pour déplacer l'élément de recouvrement dans la situation montée, est relié à une première extrémité à l'élément d'entraînement et à une seconde extrémité à l'élément de recouvrement,
**caractérisé en ce que** le système de déplacement comprend un élément d'entraînement guidé dans le moyen de guidage, entraîné par le dispositif d'entraînement via un organe de transmission réalisé sous forme de câble flexible sollicité uniquement en traction et accouplé avec le dispositif d'entraînement et que, pour le montage, on agence tout d'abord l'élément de recouvrement (2) et le dispositif d'entraînement (3) sur le véhicule automobile ou sur une partie du véhicule (1), et l'on introduit ensuite l'élément poussoir (32) dans le moyen de guidage (31) et celui-ci est relié par sa première extrémité (321) à l'élément d'entraînement (37) et par sa seconde extrémité (361) à l'élément de recouvrement (3).

5. Procédé selon la revendication 4, **caractérisé en ce que** l'élément de recouvrement (2) est disposé sur un arbre d'enroulement (231) et peut être déployé en le déroulant de l'arbre d'enroulement (231), l'élément de recouvrement (2) étant disposé avec l'arbre d'enroulement (231) sur le véhicule automobile ou la partie de véhicule (1).

6. Procédé selon la revendication 5, **caractérisé en ce que** l'élément poussoir (32) est relié à un bord de l'élément de recouvrement (2) opposé à l'arbre d'enroulement (231).

7. Procédé selon l'une des revendications 5 et 6, **caractérisé en ce que** la liaison de l'élément poussoir (32) avec l'élément d'entraînement (37) est détachable.

8. Procédé selon la revendication 7, **caractérisé en ce que** la liaison de l'élément poussoir (32) avec l'élément d'entraînement (37) est une liaison à clips (321, 371).

9. Procédé selon la revendication 8, **caractérisé en ce que** le clipsage pour établir la liaison entre l'élément poussoir (32) et l'élément d'entraînement (37) nécessite l'application d'une force moins importante que le déclipsage pour défaire la liaison.

10. Procédé selon la revendication 7, **caractérisé en ce que** la liaison de l'élément poussoir (32) avec l'élément d'entraînement (37) est une liaison à vis.

11. Procédé selon la revendication 10, **caractérisé en ce que** la liaison de l'élément poussoir (32) présente à sa première extrémité un filetage qui se visse dans un réceptacle fileté sur l'élément d'entraînement (37) pour établir la liaison.

12. Procédé selon la revendication 7, **caractérisé en ce que** la liaison de l'élément poussoir (32) avec l'élément d'entraînement (37) est une liaison à baïonnette qui peut être actionnée en tournant l'élément d'entraînement (37).

13. Procédé selon l'une des revendications 4 à 12, **caractérisé en ce qu'**un élément de guidage supplémentaire (311') est posé avant le montage sur l'élément poussoir (32) et est relié après l'insertion de l'élément poussoir (32) dans le moyen de guidage (31) du dispositif d'entraînement (3) au véhicule automobile ou à la partie de véhicule (1).

14. Procédé selon l'une des revendications 4 à 13, **caractérisé en ce qu'**un élément de guidage supplémentaire (311') est disposé sur le véhicule automobile ou la partie de véhicule (1) et ensuite l'élément poussoir (32) est inséré dans le moyen de guidage (31) du dispositif d'entraînement (3) et l'élément de guidage supplémentaire (311').

15. Procédé selon l'une des revendications 4 à 14, **caractérisé en ce qu'**après l'insertion de l'élément poussoir (32) dans le moyen de guidage (31) du dispositif d'entraînement (3), un élément de guidage supplémentaire (311') est posé sur l'élément poussoir (32) et ensuite un élément de liaison pour relier l'élément poussoir (32) avec l'élément de recouvrement (2) est disposé sur l'élément poussoir (32).

16. Procédé selon l'une des revendications 4 à 15, **caractérisé en ce que** l'élément poussoir s'étendant en longueur (32) est configuré de la même manière à sa première et à sa seconde extrémité, de sorte que l'élément poussoir (32) peut être inséré aussi bien dans la première que dans la seconde extrémité du moyen de guidage (31).
